# EUROPEAN PATENT APPLICATION

(11) **EP 4 383 622 A1**
(43) Date of publication of application: **12.06.2024**
(21) Application number: 22852023.5
(22) Date of filing: 28.07.2022
(51) Int. Cl.: H04L 5/00

(54) **FEEDBACK METHOD, RELATED DEVICE, AND READABLE STORAGE MEDIUM**

(30) Priority: 02.08.2021 CN 202110882905
(71) Applicant: Vivo Mobile Communication Co., Ltd., Dongguan, Guangdong 523863 (CN)
(72) Inventor: ZENG, Chaojun, Dongguan, Guangdong 523863 (CN); WANG, Lihui, Dongguan, Guangdong 523863 (CN); CHEN, Xiaohang, Dongguan, Guangdong 523863 (CN)
(74) Representative: Lavoix
(86) International application number: PCT/CN2022/108585
(87) International publication number: WO 2023/011309

(57) **Abstract**

This application discloses a feedback method, a related device, and a readable storage medium, and pertains to the field of communications technologies. The feedback method includes: in a case that a first physical uplink control channel (PUCCH) cell group corresponding to a terminal includes M PUCCH cells available for transmitting a hybrid automatic repeat request acknowledgement (HARQ-ACK), and M is an integer greater than 1, performing, by the terminal, a first operation; and sending, by the terminal, a first HARQ-ACK based on the first operation, where the first operation includes at least one of the following: determining a time domain feedback offset set corresponding to each of the M PUCCH cells; determining valid PUCCH cell(s) corresponding to the first HARQ-ACK among the M PUCCH cells; or determining target PUCCH cell(s) corresponding to the first HARQ-ACK among the M PUCCH cells.

## Description

### CROSS-REFERENCE TO RELATED APPLICATIONS

This application claims priority to Chinese Patent Application No. 202110882905.6, filed on August 2, 2021 in China, which is incorporated herein by reference in its entirety.

### TECHNICAL FIELD

This application pertains to the field of communications technologies, and in particular, to a feedback method, a related device, and a readable storage medium.

### BACKGROUND

In ultra-reliable and low latency communications (Ultra-Reliable and Low Latency Communications, URLLC), to shorten a feedback delay of hybrid automatic repeat request acknowledgement (Hybrid Automatic Repeat request Acknowledgement, HARQ-ACK) as much as possible, physical uplink control channel carrier switching (PUCCH carrier switching) is proposed, that is, the carrier where a physical uplink control channel (Physical Uplink Control Channel, PUCCH) is transmitted can be switched.

There is no relevant solution to feedback of HARQ-ACK in case of PUCCH carrier switching.

### SUMMARY

Embodiments of this application provide a feedback method, a related device, and a readable storage medium, to solve a feedback problem of HARQ-ACK in PUCCH carrier switching.

According to a first aspect, a feedback method is provided, and the method includes:
in a case that a first physical uplink control channel (PUCCH) cell group corresponding to a terminal includes M PUCCH cells available for transmitting a hybrid automatic repeat request acknowledgement (HARQ-ACK), and M is an integer greater than 1, performing, by the terminal, a first operation; and
sending, by the terminal, a first HARQ-ACK based on the first operation, where the first operation includes at least one of the following:
   determining a time domain feedback offset set corresponding to each of the M PUCCH cells;
   determining valid PUCCH cell(s) corresponding to the first HARQ-ACK among the M PUCCH cells; or
   determining target PUCCH cell(s) corresponding to the first HARQ-ACK among the M PUCCH cells.

According to a second aspect, a feedback method is provided, and the method is performed by a network side device and includes:
in a case that a first physical uplink control channel (PUCCH) cell group corresponding to a terminal includes M PUCCH cells available for transmitting a hybrid automatic repeat request acknowledgement (HARQ-ACK), and M is an integer greater than 1, performing, by a network side device, a first operation; and
receiving, by the network side device, a first HARQ-ACK based on the first operation, where
the first operation includes at least one of the following:
   determining a time domain feedback offset set corresponding to each of the M PUCCH cells;
   determining valid PUCCH cell(s) corresponding to the first HARQ-ACK among the M PUCCH cells; or
   determining target PUCCH cell(s) corresponding to the first HARQ-ACK among the M PUCCH cells.

According to a third aspect, a feedback apparatus is provided, and the feedback apparatus includes:
a first execution module, configured to: in a case that a first physical uplink control channel (PUCCH) cell group corresponding to a terminal includes M PUCCH cells available for transmitting a hybrid automatic repeat request acknowledgement (HARQ-ACK), and M is an integer greater than 1, perform a first operation; and
a sending module, configured to send a first HARQ-ACK based on the first operation, where
the first operation includes at least one of the following:
   determining a time domain feedback offset set corresponding to each of the M PUCCH cells;
   determining valid PUCCH cell(s) corresponding to the first HARQ-ACK among the M PUCCH cells; or
   determining target PUCCH cell(s) corresponding to the first HARQ-ACK among the M PUCCH cells.

According to a fourth aspect, a feedback apparatus is provided, and the feedback apparatus includes:
a second execution module, configured to: in a case that a first physical uplink control channel (PUCCH) cell group corresponding to a terminal includes M PUCCH cells available for transmitting a hybrid automatic repeat request acknowledgement (HARQ-ACK), and M is an integer greater than 1, perform a first operation; and
a receiving module, configured to receive a first HARQ-ACK, where
the first operation includes at least one of the following:
   determining a time domain feedback offset set corresponding to each of the M PUCCH cells;
   determining valid PUCCH cell(s) corresponding to the first HARQ-ACK among the M PUCCH cells; or
   determining target PUCCH cell(s) corresponding to the first HARQ-ACK among the M PUCCH cells.

According to a fifth aspect, a terminal is provided, where the terminal includes a processor, a memory, and a program or an instruction stored in the memory and executable on the processor, and when the program or the instruction is executed by the processor, steps of the method according to the first aspect are implemented.

According to a sixth aspect, a network side device is provided, where the network side device includes a processor, a memory, and a program or an instruction stored in the memory and executable on the processor, and when the program or the instruction is executed by the processor, steps of the method according to the second aspect are implemented.

According to a seventh aspect, a terminal is provided, including a processor and a communications interface, where the processor is configured to:
in a case that a first physical uplink control channel (PUCCH) cell group corresponding to a terminal includes M PUCCH cells available for transmitting a hybrid automatic repeat request acknowledgement (HARQ-ACK), and M is an integer greater than 1, perform a first operation; and
the communications interface is configured to:
   send a first HARQ-ACK based on the first operation, where
   the first operation includes at least one of the following:
      determining a time domain feedback offset set corresponding to each of the M PUCCH cells;
      determining valid PUCCH cell(s) corresponding to the first HARQ-ACK among the M PUCCH cells; or
      determining target PUCCH cell(s) corresponding to the first HARQ-ACK among the M PUCCH cells.

According to an eighth aspect, a network side device is provided, including a processor and a communications interface, where the processor is configured to:
in a case that a first physical uplink control channel (PUCCH) cell group corresponding to a terminal includes M PUCCH cells available for transmitting a hybrid automatic repeat request acknowledgement (HARQ-ACK), and M is an integer greater than 1, perform a first operation; and
the communications interface is configured to:
   receive a first HARQ-ACK based on the first operation, where
   the first operation includes at least one of the following:
      determining a time domain feedback offset set corresponding to each of the M PUCCH cells;
      determining valid PUCCH cell(s) corresponding to the first HARQ-ACK among the M PUCCH cells; or
      determining target PUCCH cell(s) corresponding to the first HARQ-ACK among the M PUCCH cells.

According to a ninth aspect, a readable storage medium is provided, where the readable storage medium stores a program or an instruction, and when the program or the instruction is executed by a processor, steps of the method according to the first aspect or steps of the method according to the second aspect are implemented.

According to a tenth aspect, a chip is provided. The chip includes a processor and a communications interface, the communications interface is coupled to the processor, and the processor is configured to run a program or an instruction to implement the method according to the first aspect or the method according to the second aspect.

According to an eleventh aspect, a computer program/program product is provided, where the computer program/program product is stored in a non-transitory storage medium, and the program/program product is executed by at least one processor to implement the method according to the first aspect or the method according to the second aspect.

In the embodiments of this application, the terminal can determine at least one of the following items of the M PUCCH cells in the corresponding first PUCCH cell group: a time domain feedback offset set; a valid PUCCH cell corresponding to a specific HARQ-ACK; or a target PUCCH cell corresponding to a specific HARQ-ACK, and the terminal sends the HARQ-ACK based on the determined content. It can be seen that this embodiment of this application provides a feedback mechanism of HARQ-ACK, which ensures implementation of HARQ-ACK feedback, thus shortening the feedback delay of HARQ-ACK.

### BRIEF DESCRIPTION OF DRAWINGS

FIG 1 is a schematic diagram of a wireless communications system according to an embodiment of this application;
FIG 2 is a first flowchart of a feedback method according to an embodiment of this application;
FIG 3 is a first schematic diagram of a feedback according to an embodiment of this application;
FIG 4a is a second schematic diagram of a feedback according to an embodiment of this application;
FIG 4b is a third schematic diagram of a feedback according to an embodiment of this application;
FIG 4c is a fourth schematic diagram of a feedback according to an embodiment of this application;
FIG 5 is a second flowchart of a feedback method according to an embodiment of this application;
FIG 6 is a first structural diagram of a feedback apparatus according to an embodiment of this application;
FIG 7 is a second structural diagram of a feedback apparatus according to an embodiment of this application;
FIG 8 is a structural diagram of a communications device according to an embodiment of this application;
FIG 9 is a structural diagram of a terminal according to an embodiment of this application; and
FIG 10 is a structural diagram of a network side device according to an embodiment of this application.

### DESCRIPTION OF EMBODIMENTS

The following clearly describes the technical solutions in the embodiments of this application with reference to the accompanying drawings in the embodiments of this application. Apparently, the described embodiments are some but not all of the embodiments of this application. All other embodiments obtained by a person of ordinary skill in the art based on the embodiments of this application shall fall within the protection scope of this application.

The terms "first", "second", and the like in the specification and claims of this application are used to distinguish between similar first objects instead of describing a specific order or sequence. It should be understood that, the terms used in such a way are interchangeable in proper circumstances, so that the embodiments of this application can be implemented in an order other than the order illustrated or described herein. First objects classified by "first" and "second" are usually of a same type, and the number of first objects is not limited. For example, there may be one or more first objects. In addition, in this specification and the claims, "and/or" represents at least one of connected first objects, and a character "/" generally represents an "or" relationship between associated first objects.

It should be noted that, the technologies described in the embodiments of this application are not limited to a Long Term Evolution (Long Term Evolution, LTE)/LTE-Advanced (LTE-Advanced, LTE-A) system, and can also be used in other wireless communications systems such as Code Division Multiple Access (Code Division Multiple Access, CDMA), Time Division Multiple Access (Time Division Multiple Access, TDMA), Frequency Division Multiple Access (Frequency Division Multiple Access, FDMA), Orthogonal Frequency Division Multiple Access (Orthogonal Frequency Division Multiple Access, OFDMA), Single-carrier Frequency-Division Multiple Access (Single-carrier Frequency-Division Multiple Access, SC-FDMA), and another system. The terms "system" and "network" in the embodiments of this application may be used interchangeably. The technologies described can be applied to both the systems and the radio technologies mentioned above as well as to other systems and radio technologies. The following descriptions describe a new radio (New Radio, NR) system for example purposes, and NR terms are used in most of the following descriptions, but these technologies can also be applied to an application other than an NR system application, for example, a 6^{th} generation (6^{th} Generation, 6G) communications system.

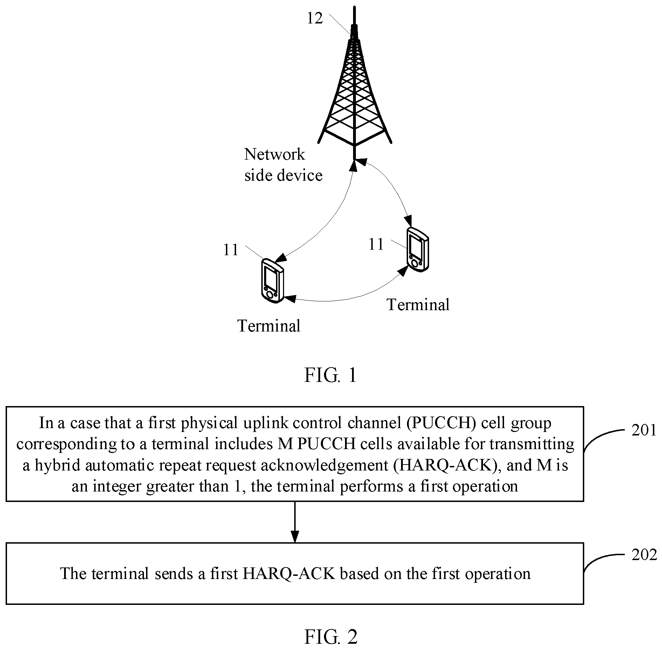

FIG 1 is a schematic diagram of a wireless communications system according to an embodiment of this application. The wireless communications system includes a terminal 11 and a network side device 12. The terminal 11 may also be referred to as a terminal device or user equipment (User Equipment, UE). The terminal 11 may be a terminal side device such as a mobile phone, a tablet personal computer (Tablet Personal Computer, TPC), a laptop computer (Laptop Computer, LC) or a notebook computer, a personal digital assistant (Personal Digital Assistant, PDA), a palmtop computer, a netbook, an ultra-mobile personal computer (ultra-mobile personal computer, UMPC), a mobile Internet device (Mobile Internet Device, MID), an augmented reality (augmented reality, AR)/virtual reality (virtual reality, VR) device, a robot, a wearable device (Wearable Device, WD), vehicle user equipment (Vehicle User Equipment, VUE), pedestrian user equipment (Pedestrian User Equipment, PUE), and smart household (household devices with wireless communications functions, such as a refrigerator, a television, a washing machine, or furniture). The wearable device includes a smart watch, a smart band, smart earphones, smart glasses, smart jewelry (a smart bracelet, a smart hand chain, a smart ring, a smart necklace, a smart bangle, a smart anklet, or the like), a smart wristband, smart clothes, a game console, and the like. It should be noted that a specific type of the terminal 11 is not limited in the embodiments of this application. The network side device 12 may be a base station or a core network device. The base station may be referred to as a Node B, an evolved Node B, an access point, a base transceiver station (Base Transceiver Station, BTS), a radio base station, a radio transceiver, a basic service set (Basic Service Set, BSS), an extended service set (Extended Service Set, ESS), a Node B, an evolved Node B (eNB), a home Node B, a home evolved Node B, a wireless local area network (Wireless Local Area Network, WLAN) access point, a wireless fidelity (Wireless Fidelity, Wi-Fi) node, a transmitting receiving point (Transmitting Receiving Point, TRP), or another specific appropriate term in the art. As long as a same technical effect is achieved, the base station is not limited to a specified technical term. It should be noted that, in the embodiments of this application, only a base station in an NR system is used as an example, but a specific type of the base station is not limited.

For ease of understanding, the following describes some content in the embodiments of this application.

In the research of URLLC, to shorten a feedback delay of HARQ-ACK as much as possible, a PUCCH carrier (carrier) switching (switching) mechanism is proposed, that is, carriers transmitted on the PUCCH can be switched. The PUCCH carrier switching can be applied to HARQ-ACK transmission or reception and other uplink control information (Uplink Control Information, UCI) types. An application scenario of PUCCH carrier switching may include the following features:
UE is configured with uplink carrier aggregation (Carrier Aggregation, CA), and there are a plurality of service cells in the uplink; and
time division duplex (Time Division Duplex, TDD) patterns (pattern) between different (uplink) serving cells of the UE are complementary to each other, that is, uplink resources of the serving cells are interleaved in time domain. By switching serving cells, a time delay of obtaining the uplink resource can be shortened as much as possible.

Optionally, the application scenario of PUCCH carrier switching may include an inter-band (Inter-band) scenario.

The PUCCH carrier switching can support two manners: switching based on dynamic indication of downlink control information (Downlink Control Information, DCI) (Alt. 1) and semi-static switching based on a time domain pattern (Time domain pattern) (Alt. 2C). That is, carriers transmitted on the PUCCH can be switched dynamically based on the DCI or switched semi-statically based on the time domain pattern.

In the embodiments of this application, considering that one cell corresponds to one active carrier, PUCCH carrier switching and PUCCH cell switching (PUCCH cell switching) can be equivalently replaced; and a transmission or reception carrier of HARQ-ACK can be understood as a PUCCH cell where HARQ-ACK feedback is located.

A time domain feedback offset can be expressed as K1, but it is not limited to this. For ease of understanding, the time domain feedback offset is illustrated by K1 in the following, but it is not limited to the manifestation of the time domain feedback offset. For example, the time domain feedback offset can be represented as a time domain offset amount based on a specific reference time or start time and expressed with a time unit as the granularity.

The embodiments of this application will be described in detail below through some embodiments and application scenarios thereof with reference to the accompanying drawings.

Referring to FIG 2, FIG 2 is a flowchart of a feedback method according to an embodiment of this application. The feedback method in FIG 2 may be performed by a terminal. As shown in FIG 2, the feedback method may include the following steps.

Step 201. In a case that a first physical uplink control channel (PUCCH) cell group (cell group) corresponding to a terminal includes M PUCCH cells available for transmitting a hybrid automatic repeat request acknowledgement (HARQ-ACK), and M is an integer greater than 1, the terminal performs a first operation.

In specific implementation, the first PUCCH cell group can be any PUCCH cell group corresponding to the terminal. The first PUCCH cell group includes two or more PUCCH cells, so PUCCH cell switching can be performed in the first PUCCH cell group for an HARQ-ACK terminal, to shorten the HARQ-ACK feedback delay. In implementation, the PUCCH cell can be switched dynamically based on the DCI or switched semi-statically based on the time domain pattern. This may be specifically determined according to an actual requirement, and this is not limited in this embodiment of this application.

In this embodiment of this application, the first operation includes at least one of the following:
1) determining a time domain feedback offset set corresponding to each of the M PUCCH cells;
2) determining valid PUCCH cell(s) corresponding to the first HARQ-ACK among the M PUCCH cells; or
3) determining target PUCCH cell(s) corresponding to the first HARQ-ACK among the M PUCCH cells.

In 1), K1 sets (K1 set) corresponding to PUCCH cells in the M PUCCH cells can be the same or different. This may be specifically determined according to an actual requirement, and this is not limited in this embodiment of this application.

In 2), the valid PUCCH cell corresponding to the first HARQ-ACK can be understood as a PUCCH cell in an active state or an available state at a feedback moment of the first HARQ-ACK. The first HARQ-ACK may be any HARQ-ACK of the terminal, and the first HARQ-ACK may be a semi-persistent scheduling (Semi-Persistent Scheduling, SPS) HARQ-ACK or a dynamic scheduling HARQ-ACK.

In 3), the target PUCCH cell corresponding to the first HARQ-ACK can be understood as the PUCCH cell that transmits the first HARQ-ACK, that is, the target PUCCH cell is used to transmit the first HARQ-ACK.

The target PUCCH cell may or may not be related to the valid PUCCH cell. This may be specifically determined according to an actual requirement, and this is not limited in this embodiment of this application.

Step 202. The terminal sends a first HARQ-ACK based on the first operation.

In specific implementation, implementation of step 202 is related to content of the first operation. An example is as follows.

The terminal may send the first HARQ-ACK based on the selected PUCCH resource at a specific time unit of the target PUCCH cell corresponding to the first HARQ-ACK, and the time unit may be determined based on one K1 in the K1 set corresponding to the target PUCCH cell.

It should be noted that the above implementation is only an example, and for details, refer to the following description.

In the feedback method of this embodiment, the terminal can determine at least one of the following items of the M PUCCH cells in the corresponding first PUCCH cell group: a time domain feedback offset set; a valid PUCCH cell corresponding to a specific HARQ-ACK; or a target PUCCH cell corresponding to a specific HARQ-ACK, and the terminal sends the HARQ-ACK based on the determined content. It can be seen that this embodiment of this application provides a feedback mechanism of HARQ-ACK, which ensures implementation of HARQ-ACK feedback, thus shortening the feedback delay of HARQ-ACK.

The first operation is specifically described below.

### As for 1)

Optionally, time domain feedback offset sets corresponding to the M PUCCH cells are configured uniformly or separately.

In this optional implementation, the K1 set corresponding to the PUCCH cell may be determined by using one of the following.

K1 set configuration manner 1: the time domain feedback offset sets corresponding to the M PUCCH cells are configured uniformly.

K1 set configuration manner 2: the time domain feedback offset sets corresponding to the M PUCCH cells are configured separately.

As for the K1 set configuration manner 1, the K1 set is in a one-to-one correspondence with the PUCCH cell group, that is, the K1 set corresponding to PUCCH cells in one PUCCH cell group is configured uniformly. PUCCH cells in the first PUCCH cell group corresponds to one K1 set.

As for the K1 set configuration manner 2, the K1 set is in a one-to-one correspondence with the PUCCH cell, that is, the K1 set corresponding to PUCCH cells in one PUCCH cell group is configured separately. In the first PUCCH cell group, each PUCCH cell corresponds to one K1 set.

In the K1 set configuration manner 2, values of K1 and/or the number of K1s in K1 sets corresponding to different PUCCH cells in the M PUCCH cells may be different or the same. This may be specifically determined according to an actual requirement, and this is not limited in this embodiment of this application.

In this embodiment of this application, as for different K1 set configuration manners, manners for determining an object corresponding to K1 in the K1 set may be different, and for details, refer to the following description.

The object corresponding to K1 can be used to determine at least one of the following: a time unit corresponding to K1; or a length of each time unit corresponding to K1.

Optionally, the object corresponding to K1 may include at least one of the following:
a first object, which can be a numerology (Numerology) or a subcarrier spacing (Subcarrier Spacing, SCS), and can be used to determine the length of each time unit corresponding to K1; or
a second object, which can include at least one of the following: a time domain granularity; or the number of symbols (Symbol) corresponding to a sub-slot (Sub-slot).

The time domain granularity can be used to determine the time unit corresponding to K1, and the time granularity can be a slot, a sub-slot, a symbol, or the like. The time unit is consistent with the time domain granularity, for example, if the time granularity is slot, the time unit is slot; and if the time granularity is sub-slot, the time unit is sub-slot.

The number of symbols corresponding to the sub-slot can be used to determine the length of the sub-slot.

### I. Determination of the first object corresponding to K1.

### For the K1 set configuration manner 1

Optionally, the time domain feedback offset sets corresponding to the M PUCCH cells are uniformly configured as a first time domain feedback offset set; and
a first object corresponding to the first time domain feedback offset set is configured uniformly or separately for the M PUCCH cells, where
the first object is a numerology or a subcarrier spacing (SCS).

In this optional implementation, the first object corresponding to the first K1 set may be determined by using one of the following manners.

First object determining manner 1: the first object corresponding to the first K1 set is configured uniformly for the M PUCCH cells.

First object determining manner 2: the first object corresponding to the first K1 set is configured separately for the M PUCCH cells.

### As for the first object determining manner 1

The first object corresponding to the K1 set is in a one-to-one correspondence with the PUCCH cell group. When transmitting the HARQ-ACK by using different PUCCH cells in the first PUCCH cell group, the terminal has consistent understanding for the first object corresponding to the first K1 set.

Optionally, the first object corresponding to the first time domain feedback offset set is determined based on a reference object, and the reference object is a reference numerology or a reference SCS.

In implementation, an expression form of the first object is the same as that of the reference object, for example, in a case that the first object is the numerology, the reference object is the reference numerology; and in a case that the first object is the SCS, the reference object is the reference SCS.

Optionally, the reference object can meet one of the following.

First object determining manner 1-1: the reference object is a first object corresponding to a first cell, and the first cell is a primary cell (Primary cell, PCell), a primary secondary cell (Primary Secondary Cell, PSCell), or a PUCCH secondary cell (Secondary Cell, SCell).

First object determining manner 1-2: the reference object is configured by higher layer signaling.

First object determining manner 1-3: the reference object is a first object with a maximum index corresponding to the M PUCCH cells.

First object determining manner 1-4: the reference object is a first object with a minimum index corresponding to the M PUCCH cell.

First object determining manner 1-5: in a case that a PUCCH cell is switched semi-statically based on a time domain pattern, the reference object is a first object corresponding to the time domain pattern.

As for the first object determining manner 1-1, the first cell is a first cell corresponding to the first PUCCH cell group. The first object corresponding to the first cell can be understood as one of the following:
a first object corresponding to an uplink (UpLink, UL) active (Active) bandwidth part (Bandwidth Part, BWP) (UL Active BWP) of the first cell; or
a first object with an index of a minimum value (or a lowest value), a maximum value (or a highest value), or a preset value among first objects corresponding to BWPs of the first cell.

As for the first object determining manner 1-2, the reference object configured by the higher layer signaling can be determined based on an actual demand, which is not limited in this embodiment of this application.

Optionally, the index of the reference object may be less than or equal to an index of a first object corresponding to any BWP configured in any one of the M PUCCH cells. In this way, in a plurality of time units that are determined based on the reference object and that are corresponding to a single uplink time unit on an actually transmitted PUCCH cell, it can avoid that if there are more than one time unit, an HARQ-ACK needs to be fed back based on K1, thus avoiding additional protocol and implementation complexity.

As for the first object determining manner 1-3, the reference object can be understood as a first object corresponding to a PUCCH cell with a maximum µ among the M PUCCH cells, and µ is the index of the first object.

In the implementation of this application, the first object corresponding to the PUCCH cell can be understood as one of the following:
a first object corresponding to a UL Active BWP of the PUCCH cell; or
a first object with an index of a minimum value (or a lowest value), a maximum value (or a highest value), or a preset value among first objects corresponding to BWPs of the PUCCH cell.

As for the first object determining manner 1-4, the reference object can be understood as a first object corresponding to a PUCCH cell with a minimum µ among the M PUCCH cells.

The first object determining manner 1-5 can be applied to a scenario where the PUCCH cell is switched semi-statically based on the time domain pattern, and the terminal can determine the first object corresponding to the time domain pattern as the reference object.

Optionally, the sending, by the terminal, a first HARQ-ACK based on the first operation includes:
determining a first time unit based on a target time domain feedback offset and the reference object, where the target time domain feedback offset is one time domain feedback offset in the first time domain feedback offset set;
determining a target time unit of the target PUCCH cell based on a correspondence between the first time unit and time unit(s) of the target PUCCH cell; and
sending the first HARQ-ACK in the target time unit.

The correspondence can be expressed as any of the following:
Case 0: the first time unit corresponds to one time unit of the target PUCCH cell;
Case 1: the first time unit corresponds to Q time units of the target PUCCH cell, and Q is an integer greater than 1; and
Case 2: the first time unit corresponds to a part of one time unit of the target PUCCH cell.

In the case 0, the first time unit completely overlaps with a specific time unit of the target PUCCH cell in time domain, that is, start and end moments thereof are exactly the same. In this case, the target time unit is a time unit of the target PUCCH cell corresponding to the first time unit.

In the case 1, the target time unit can be any one of the Q time units.

In the case 2, the target time unit is a time unit of the target PUCCH cell corresponding to the first time unit.

In this case, the target time unit may correspond to T time units determined based on the reference object, and T is an integer greater than 1. Further, there may be Y time units in the T time units that need to be fed back with an HARQ-ACK, and Y is an integer greater than 1 and less than or equal to T. In this case, the terminal can generate Y HARQ-ACK sub-codebooks that are in a one-to-one correspondence with the Y time units, and then cascade the Y HARQ-ACK sub-codebooks in a preset order, to obtain a single HARQ-ACK codebook, and then send the HARQ-ACK codebook on the target time unit.

Optionally, the correspondence may be determined based on a comparison relationship between a first index of a first object corresponding to the target PUCCH cell and a second index of the reference object.

The comparison relationship can be expressed as any of the following:
the first index is less than the second index;
the first index is equal to the second index; and
the first index is greater than the second index.

Optionally, the correspondence meets one of the following:
in a case that the first index is less than or equal to the second index, the first time unit corresponds to the target time unit; or
in a case that the first index is greater than the second index, the first time unit corresponds to Q time units of the target PUCCH cell, the target time unit is one of the Q time units, and Q is an integer greater than 1.

In specific implementation, in a case that the first index is equal to the second index, the correspondence between the first time unit and the target time unit corresponds to the case 0.

In a case that the first index is less than the second index, the correspondence between the first time unit and the target time unit corresponds to the case 2.

In a case that the first index is greater than the second index, the correspondence between the first time unit and the target time unit corresponds to the case 1.

Optionally, in a case that the first time unit corresponds to the Q time units of the target PUCCH cell, the determining a target time unit of the target PUCCH cell based on a correspondence between the first time unit and time unit(s) of the target PUCCH cell includes one of the following:
a) determining the target time unit of the target PUCCH cell based on time unit(s) that meets a first condition among the Q time units, where the first condition includes at least one of the following: being able to accommodate a PUCCH resource corresponding to the first HARQ-ACK; or meeting a downlink processing time requirement of the terminal; or
b) determining a time unit with an index of a maximum value, a minimum value, or a preset value among the Q time units as the target time unit of the target PUCCH cell.

In a), the terminal may first select a time unit meeting a first condition from the Q time units. Then, based on the time unit meeting the first condition, the target time unit of the target PUCCH cell is determined. In this way, it can be ensured that the HARQ-ACK can be actually fed back in the selected target time unit, thereby ensuring the performance of HARQ-ACK feedback.

The time unit meeting the first condition can accommodate a first PUCCH resource, and the first PUCCH resource can accommodate at least the first HARQ-ACK and further accommodate other multiplexed UCI. The first PUCCH resource is a PUCCH resource that can be actually transmitted, for example, the first PUCCH resource does not overlap/conflict with at least one of the following: a semi-static downlink (DownLink, DL) symbol (Semi-static DL symbol); a synchronization signal and PBCH block (Synchronization Signal and PBCH block, SSB); or a control resource set (Control Resource Set, CORESET) #0 symbol.

The time unit meeting the first condition can meet a downlink processing time requirement of the terminal, that is, a time interval between a time unit that the terminal receives physical downlink shared channel (Physical downlink shared channel, PDSCH) transmission or reception corresponding to the first HARQ-ACK and the time unit needs to be greater than or equal to the downlink processing time of the terminal, or a time interval between an end time when the terminal receives the PDSCH transmission or reception corresponding to the first HARQ-ACK and a start time of the PUCCH resource determined in this time unit needs to be greater than or equal to the downlink processing time of the terminal.

Optionally, the determining the target time unit based on time unit(s) that meets a first condition among the Q time units includes at least one of the following:
in a case that the number of time units that meet the first condition among the Q time units is 1, determining the time unit that meets the first condition as the target time unit; or
in a case that the number of time units that meet the first condition among the Q time units is greater than 1, determining a time unit with an index of a maximum value, a minimum value, or a preset value among the time units that meet the first condition as the target time unit.

In b), the terminal may directly determine a time unit with an index of a maximum value, a minimum value, or a preset value among the Q time units as the target time unit of the target PUCCH cell.

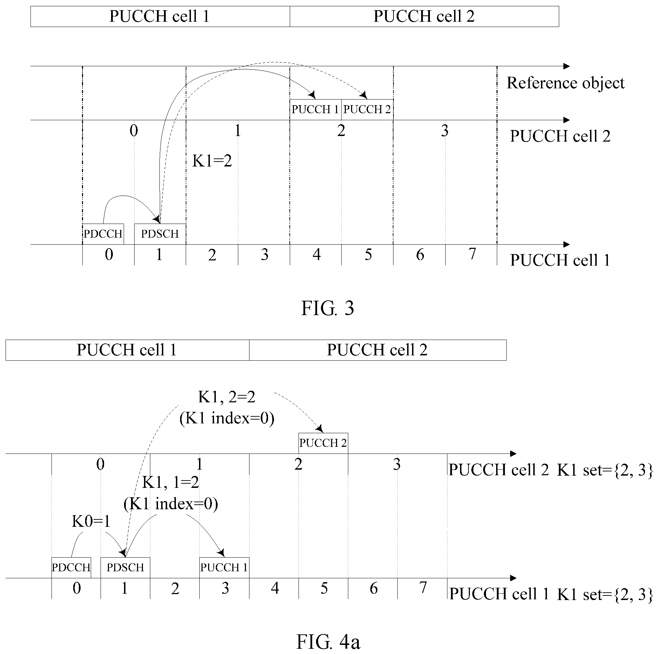

For ease of understanding, refer to FIG 3.

In FIG 3, the HARQ-ACK corresponding to PDSCH points to two time units of a PUCCH cell 2. When actually transmitting the HARQ-ACK, the terminal can select one of the time units and transmit he HARQ-ACK on a PUCCH 1 or a PUCCH 2.

As for the first object determining manner 2

The first object corresponding to the K1 set is in a one-to-one correspondence with the PUCCH cell. When the terminal transmits the HARQ-ACK by using different PUCCH cells in the first PUCCH cell group, the first K1 set may correspond to the same or different first obj ects.

Optionally, in a case that the first object corresponding to the first time domain feedback offset set is configured separately for the M PUCCH cells, for a first PUCCH cell, the first object corresponding to the first time domain feedback offset set is determined based on the first object corresponding to the first PUCCH cell, and the first PUCCH cell is any one of the M PUCCH cells.

In this optional implementation, when the terminal transmits the HARQ-ACK by using the first PUCCH cell, understanding for the first object corresponding to the first K1 set can be determined based on the first object corresponding to the first PUCCH cell. Specifically, the first object corresponding to the first PUCCH cell can be understood as the first object corresponding to the first K1 set.

### II. Determination of the second object corresponding to K1.

Optionally, the time domain feedback offset sets corresponding to the M PUCCH cells are uniformly configured as a first time domain feedback offset set; and
a second object corresponding to the first time domain feedback offset set is configured uniformly or separately for the M PUCCH cells, where
the second object includes at least one of the following: a time domain granularity; or the number of symbols corresponding to a sub-slot.

In this optional implementation, the second object corresponding to the first K1 set may be determined by using one of the following manners.

Second object determining manner 1: the second object corresponding to the first K1 set is configured uniformly for the M PUCCH cells.

Second object determining manner 2: the second object corresponding to the first K1 set is configured separately for the M PUCCH cells.

### As for the second object determining manner 1

The second object corresponding to the K1 set is in a one-to-one correspondence with the PUCCH cell group. When transmitting the HARQ-ACK by using different PUCCH cells in the first PUCCH cell group, the terminal has consistent understanding for the second object corresponding to the first K1 set. In this way, as for any PUCCH cell in one PUCCH cell group, when K1 or a K1 set subscript/index is indicated, an HARQ-ACK feedback is exactly equal to a feedback delay (an absolute value thereof) of a time unit for PDSCH receiving, thus avoiding an ambiguity problem of a feedback position in time domain.

### As for the second object determining manner 2

The second object corresponding to the K1 set is in a one-to-one correspondence with the PUCCH cell. When the terminal transmits the HARQ-ACK by using different PUCCH cells in the first PUCCH cell group, the first K1 set may correspond to the same or different second objects.

Optionally, as for each PUCCH cell, the second object corresponding to the first time domain feedback offset set may be configured separately for each UL BWP of the PUCCH cell.

Optionally, in a case that the second object corresponding to the first time domain feedback offset set is configured separately for the M PUCCH cells, and the second PUCCH cell is configured with physical layer priority(ies), for each uplink bandwidth part (BWP) corresponding to the second PUCCH cell, the second object corresponding to the first time domain feedback offset set is configured separately for each physical layer priority, and the second PUCCH cell is any one of the M PUCCH cells.

In specific implementation, the second object corresponding to the first time domain feedback offset set can be configured separately for each physical layer priority corresponding to the second PUCCH cell; and alternatively, the second object corresponding to the first time domain feedback offset set can be configured separately, with different physical layer priorities, for a specific BWP or each BWP configured in the second PUCCH cell. This may be specifically determined according to an actual requirement, and this is not limited in this embodiment of this application.

### For the K1 set configuration manner 2

Optionally, in a case that the time domain feedback offset sets corresponding to the M PUCCH cells are configured separately, both a first object and a second object that are corresponding to the second time domain feedback offset set are configured separately for the M PUCCH cells, where
the second time domain feedback offset set is a time domain feedback offset set corresponding to any one of the M PUCCH cells; the first object is a numerology or a subcarrier spacing (SCS); and the second object includes at least one of the following: a time domain granularity; or the number of symbols corresponding to a sub-slot.

It should be noted that an implementation in which the first object corresponding to the second time domain feedback offset set is configured separately for the M PUCCH cells is the same as an implementation in which the first object corresponding to the first time domain feedback offset set is configured separately for the M PUCCH cells, and an implementation in which the second object corresponding to the second time domain feedback offset set is configured separately for the M PUCCH cells is the same as an implementation in which the second object corresponding to the first time domain feedback offset set is configured separately for the M PUCCH cells. For details, reference may be made to the foregoing related description, and details are not repeated herein again.

In this embodiment of this application, optionally, in a case that the time domain feedback offset sets corresponding to the M PUCCH cells are configured separately, the number of bits of a first field in first DCI may meet one of the following.

Manner 1 for determining the number of bits: being determined based on a maximum number in first number(s), where the first number(s) includes the number of time domain feedback offsets in a time domain feedback offset set corresponding to each of the M PUCCH cells.

Manner 2 for determining the number of bits: being specified by a protocol or configured by higher layer signaling.

The first DCI is downlink scheduling DCI of any serving cell in the first PUCCH cell group, and the first field is used to indicate an index of a time domain feedback offset. The first DCI may be DCI in a format such as DCI format (format) 1_1 or DCI format 1_2, or may be non-fallback (Non-fallback) DCI. This may be specifically determined according to an actual requirement, and this is not limited in this embodiment of this application.

As for the manner 1 for determining the number of bits, in specific implementation, the terminal may obtain the number of K1s in a K1 set corresponding to each of the M PUCCH cells, then determine a maximum number in these numbers, and determine the number of bits in the first field based on the maximum number. Optionally, the number of bits in the first field may be greater than or equal to the maximum number, for example, the number of bits in the first field=ceiling(log2(Imax)), where Imax is the maximum number, and ceiling() is an upward rounding operation. In this way, it can be ensured that the downlink scheduling DCI corresponding to each service cell in the first PUCCH cell group can indicate K1 from a K1 set applied to any PUCCH cell in the first PUCCH cell as required, so that reliability of determining K1 can be improved.

As for the manner 2 for determining the number of bits, optionally, in a case that the number of bits of the first field is configured by the higher layer signaling, the number of bits of the first field in the downlink scheduling DCI of each serving cell in the first PUCCH cell group is configured uniformly or separately. That is, the number of bits in the first field can be configured uniformly for the PUCCH cell group or configured separately for the serving cell.

In the manner 2 for determining the number of bits, optionally, the number of bits in the first field may be greater than or equal to the maximum number. Certainly, the number of bits in the first field may be less than the maximum number. In this case, for some PUCCH cells in the first PUCCH cell, the first DCI can only indicate a part of K1s in the K1 set applied to the PUCCH cell, for example, it can only indicate a K1 index range that can be indicated by a value corresponding to the number of bits in the first field.

### As for 2)

Optionally, the determining valid PUCCH cell(s) corresponding to the first HARQ-ACK among the M PUCCH cells includes:
in a case that a second PUCCH cell in the PUCCH cells meets a first condition, determining a third PUCCH cell as the valid PUCCH cell corresponding to the first HARQ-ACK, where
the first condition includes at least one of the following:
   Condition 1: based on a time domain pattern, the third PUCCH cell is in an available state at the feedback time domain position of the first HARQ-ACK; or
   Condition 2: based on a time division duplex (Time Division Duplex, TDD) pattern rule, the third PUCCH cell is in an available state at the feedback time domain position of the first HARQ-ACK.

In Condition 1, the time domain pattern may be a time domain pattern corresponding to the first PUCCH cell group, that is, the time domain pattern is configured uniformly for the PUCCH cell group; or the time domain pattern may be a time domain pattern corresponding to the third PUCCH cell, that is, the time domain pattern is configured separately for the PUCCH cell in the PUCCH cell group.

In Condition 2, the TDD pattern rule can be understood as: a PUCCH resource determined based on the first HARQ-ACK is legal, that is, the PUCCH resource can be used for actual transmission or reception.

### As for 3)

In this embodiment of this application, there may be a problem that it is ambiguous for the terminal in determining the actually transmitted PUCCH cell, that is, there may be at least two PUCCH cells that can be used for actual transmission or reception. For example, when the K1 set configuration manner 1, and the first object determining manner 1-2 or the second object determining manner 1-2 (that is, lengths of time units may be different for a given K1) are used, or when the K1 set configuration manner 2 is used, the above problem occurs.

For ease of understanding, refer to FIG 4a to FIG 4c.

It is assumed that a current PUCCH cell group of UE includes a PUCCH cell 1 and a PUCCH cell 2.

In FIG 4a, when it is indicated in DCI that K1 index=0, it corresponds to K1=2 in the K1 set uniformly configured for the current PUCCH cell group, but lengths of time units corresponding to two PUCCH cells are different.

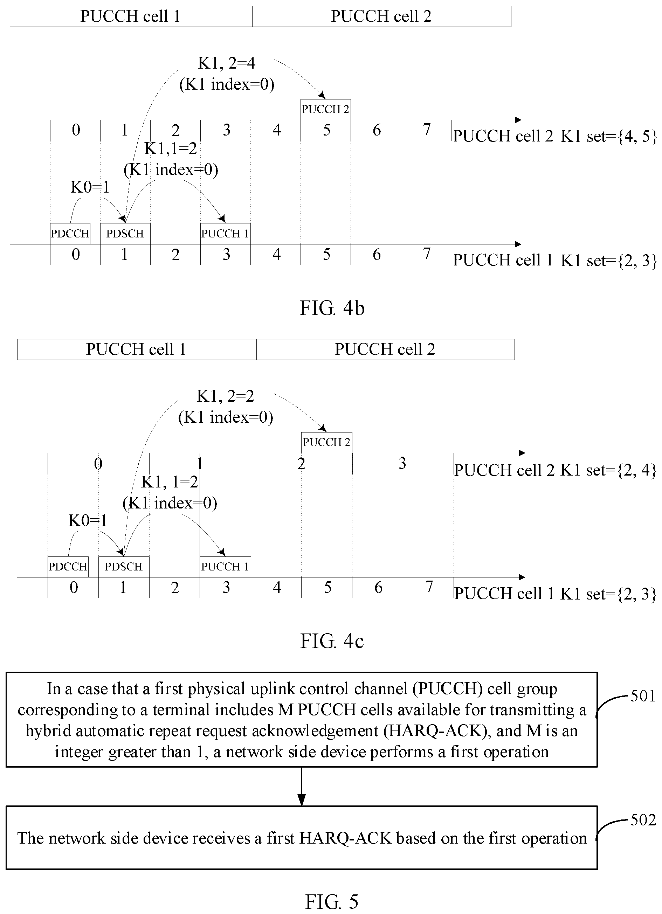

In FIG 4b, when it is indicated in DCI that K1 index=0, it can separately correspond to K1, 1=2 on the PUCCH cell 1 and K1, 2=4 on the PUCCH cell 2.

In FIG 4c, when it is indicated in DCI that K1 index=0, it can separately correspond to K1, 1=2 on the PUCCH cell 1 and K1, 2=2 on the PUCCH cell 2.

As for FIG 4a, FIG 4b, and FIG 4c, at a switching boundary of the PUCCH cell determined based on the time domain pattern, the UE cannot determine whether to feed back an HARQ-ACK corresponding to a scheduled PDSCH on the PUCCH cell 1 or the PUCCH cell 2, because both the PUCCH cell 1 and the PUCCH cell 2 can be used for actual transmission or reception.

The above problems can be solved in the following manners.

Optionally, the determining target PUCCH cell(s) corresponding to the first HARQ-ACK among the M PUCCH cells includes at least one of following.

Processing manner 1: in a case that the M PUCCH cells include only one valid PUCCH cell corresponding to the first HARQ-ACK, determining the valid PUCCH cell as the target PUCCH cell.

Processing manner 2: in a case that the M PUCCH cells include at least two valid PUCCH cells corresponding to the first HARQ-ACK, selecting, based on a first rule, one valid PUCCH cell from the at least two valid PUCCH cells as the target PUCCH cell.

Processing manner 3: selecting the target PUCCH cell from the M PUCCH cells based on second DCI, where the second DCI indicates the target PUCCH cell.

Processing manner 4: determining all or a part of valid PUCCH cells corresponding to the first HARQ-ACK among the M PUCCH cells as target PUCCH cells.

As for the processing manner 1, the network side can ensure that there is only one valid PUCCH cell among the M PUCCH cells, so that the terminal can directly determine the valid PUCCH cell as the target PUCCH cell, that is, actually transmit the first HARQ-ACK by using the PUCCH cell.

As for the processing manner 2, the terminal can select one PUCCH cell as the target PUCCH cell from the at least two valid PUCCH cells according to the first rule, and transmit the first HARQ-ACK.

The first rule may be predetermined in a protocol, configured by a network side device, or determined by negotiation between the terminal and the network side device. Optionally, the first rule may include at least one of the following:
determining a PUCCH cell with a minimum or maximum PUCCH cell index among the at least two valid PUCCH cells as the target PUCCH cell; or
determining a PUCCH cell with a minimum HARQ-ACK feedback delay among the at least two valid PUCCH cells as the target PUCCH cell.

In this embodiment of this application, the PUCCH cell index can be understood as one of the following:
a cell index corresponding to a PUCCH cell;
a UL serving cell (Serving cell) index corresponding to a PUCCH cell; or
a PUCCH cell index in a PUCCH cell group, numbered from 0.

In specific implementation, the HARQ-ACK feedback delay of the PUCCH cell can be determined based on a start or end time of the PUCCH resource determined by the PUCCH cell.

As for the processing manner 3, the PUCCH cell indicated by the first DCI may be a valid PUCCH cell corresponding to the first HARQ-ACK, but it is not limited to this.

Optionally, the PUCCH cell indicated by the first DCI is consistent with the PUCCH cell determined based on the time domain pattern, that is, the PUCCH cell indicated by the first DCI is in an active or available state based on the time domain pattern at a feedback moment of the first HARQ-ACK.

As for the processing manner 4, in specific implementation, it can be realized in one of the following manners.

It is assumed that there are U valid PUCCH cells among the M PUCCH cells, and U is a positive integer.

Implementation 1: the terminal can transmit the first HARQ-ACK on all of the U valid PUCCH cells.

Implementation 2: the terminal can select at least one PUCCH cell from the U valid PUCCH cells and transmit the first HARQ-ACK on the at least one PUCCH cell.

Referring to FIG 5, FIG 5 is a flowchart of a feedback method according to an embodiment of this application. The feedback method in FIG 5 is performed by a network side device. As shown in FIG 5, the feedback method may include the following steps.

Step 501. In a case that a first physical uplink control channel (PUCCH) cell group corresponding to a terminal includes M PUCCH cells available for transmitting a hybrid automatic repeat request acknowledgement (HARQ-ACK), and M is an integer greater than 1, a network side device performs a first operation.

The first operation includes at least one of the following:
determining a time domain feedback offset set corresponding to each of the M PUCCH cells;
determining valid PUCCH cell(s) corresponding to the first HARQ-ACK among the M PUCCH cells; or
determining target PUCCH cell(s) corresponding to the first HARQ-ACK among the M PUCCH cells.

Step 502. The network side device receives a first HARQ-ACK based on the first operation.

Optionally, time domain feedback offset sets corresponding to the M PUCCH cells are configured uniformly or separately.

Optionally, the time domain feedback offset sets corresponding to the M PUCCH cells are uniformly configured as a first time domain feedback offset set; and
a first object corresponding to the first time domain feedback offset set is configured uniformly or separately for the M PUCCH cells, where
the first object is a numerology or a subcarrier spacing (SCS).

Optionally, in a case that the first object corresponding to the first time domain feedback offset set is configured uniformly for the M PUCCH cells, the first object corresponding to the first time domain feedback offset set is determined based on a reference object, and the reference object is a reference numerology or a reference SCS.

Optionally, the reference object meets one of the following:
the reference object is a first object corresponding to a first cell, and the first cell is a primary cell, a primary secondary cell, or a PUCCH secondary cell corresponding to the first PUCCH cell group;
the reference object is configured by higher layer signaling;
the reference object is a first object with a maximum index corresponding to the M PUCCH cells;
the reference object is a first object with a minimum index corresponding to the M PUCCH cells; or
in a case that a PUCCH cell is switched semi-statically based on a time domain pattern, the reference object is a first object corresponding to the time domain pattern.

Optionally, in a case that the reference object is configured by the higher layer signaling, an index of the reference object is less than or equal to an index of a first object corresponding to any BWP configured in any one of the M PUCCH cells.

Optionally, the receiving, by the network side device, a first HARQ-ACK based on the first operation includes:
determining a first time unit based on a target time domain feedback offset and the reference object, where the target time domain feedback offset is one time domain feedback offset in the first time domain feedback offset set;
determining a target time unit of the target PUCCH cell based on a correspondence between the first time unit and time unit(s) of the target PUCCH cell; and
receiving the first HARQ-ACK in the target time unit.

Optionally, the correspondence is determined based on a comparison relationship between a first index of a first object corresponding to the target PUCCH cell and a second index of the reference object.

Optionally, the correspondence meets one of the following:
in a case that the first index is less than or equal to the second index, the first time unit corresponds to the target time unit; or
in a case that the first index is greater than the second index, the first time unit corresponds to Q time units of the target PUCCH cell, the target time unit is one of the Q time units, and Q is an integer greater than 1.

Optionally, in a case that the first time unit corresponds to the Q time units of the target PUCCH cell, the determining a target time unit of the target PUCCH cell based on a correspondence between the first time unit and time unit(s) of the target PUCCH cell includes one of the following:
determining the target time unit of the target PUCCH cell based on time unit(s) that meets a first condition among the Q time units, where the first condition includes at least one of the following: being able to accommodate a first PUCCH resource, where the first PUCCH resource includes a PUCCH resource corresponding to the first HARQ-ACK; or meeting a downlink processing time requirement of the terminal; or
determining a time unit with an index of a maximum value, a minimum value, or a preset value among the Q time units as the target time unit of the target PUCCH cell.

Optionally, the determining the target time unit based on time unit(s) that meets a first condition among the Q time units includes at least one of the following:
in a case that the number of time units that meet the first condition among the Q time units is 1, determining the time unit that meets the first condition as the target time unit; or
in a case that the number of time units that meet the first condition among the Q time units is greater than 1, determining a time unit with an index of a maximum value, a minimum value, or a preset value among the time units that meet the first condition as the target time unit.

Optionally, in a case that the first object corresponding to the first time domain feedback offset set is configured separately for the M PUCCH cells, for a first PUCCH cell, the first object corresponding to the first time domain feedback offset set is determined based on the first object corresponding to the first PUCCH cell, and the first PUCCH cell is any one of the M PUCCH cells.

Optionally, the time domain feedback offset sets corresponding to the M PUCCH cells are uniformly configured as a first time domain feedback offset set; and
a second object corresponding to the first time domain feedback offset set is configured uniformly or separately for the M PUCCH cells, where
the second object includes at least one of the following: a time domain granularity; or the number of symbols corresponding to a sub-slot.

Optionally, in a case that the second object corresponding to the first time domain feedback offset set is configured separately for the M PUCCH cells, and the second PUCCH cell is configured with physical layer priority(ies), for each uplink bandwidth part (BWP) corresponding to the second PUCCH cell, the second object corresponding to the first time domain feedback offset set is configured separately for each physical layer priority, and the second PUCCH cell is any one of the M PUCCH cells.

Optionally, in a case that the time domain feedback offset sets corresponding to the M PUCCH cells are configured separately, both a first object and a second object that are corresponding to the second time domain feedback offset set are configured separately for the M PUCCH cells, where
the second time domain feedback offset set is a time domain feedback offset set corresponding to any one of the M PUCCH cells; the first object is a numerology or a subcarrier spacing (SCS); and the second object includes at least one of the following: a time domain granularity; or the number of symbols corresponding to a sub-slot.

Optionally, in a case that the time domain feedback offset sets corresponding to the M PUCCH cells are configured separately, the number of bits of a first field in first DCI meets one of the following:
being determined based on a maximum number in first number(s), where the first number(s) includes the number of time domain feedback offsets in a time domain feedback offset set corresponding to each of the M PUCCH cells; or
being specified by a protocol or configured by higher layer signaling, where
the first DCI is downlink scheduling DCI of any serving cell in the first PUCCH cell group, and the first field is used to indicate an index of a time domain feedback offset.

Optionally, in a case that the number of bits of the first field is configured by the higher layer signaling, the number of bits of the first field in the downlink scheduling DCI of each serving cell in the first PUCCH cell group is configured uniformly or separately.

Optionally, the determining valid PUCCH cell(s) corresponding to the first HARQ-ACK among the M PUCCH cells includes:
in a case that a second PUCCH cell in the PUCCH cells meets a first condition, determining a third PUCCH cell as the valid PUCCH cell corresponding to the first HARQ-ACK, where
the first condition includes at least one of the following:
   based on a time domain pattern, the third PUCCH cell is in an available state at the feedback time domain position of the first HARQ-ACK; or
   based on a time division duplex (TDD) pattern rule, the third PUCCH cell is in an available state at the feedback time domain position of the first HARQ-ACK.

Optionally, the determining target PUCCH cell(s) corresponding to the first HARQ-ACK among the M PUCCH cells includes at least one of following:
in a case that the M PUCCH cells include only one valid PUCCH cell corresponding to the first HARQ-ACK, determining the valid PUCCH cell as the target PUCCH cell;
in a case that the M PUCCH cells include at least two valid PUCCH cells corresponding to the first HARQ-ACK, selecting, based on a first rule, one valid PUCCH cell from the at least two valid PUCCH cells as the target PUCCH cell;
selecting the target PUCCH cell from the M PUCCH cells based on second DCI, where the second DCI indicates the target PUCCH cell; or
determining all or a part of valid PUCCH cells corresponding to the first HARQ-ACK among the M PUCCH cells as target PUCCH cells.

Optionally, the first rule includes at least one of the following:
determining a PUCCH cell with a minimum or maximum PUCCH cell index among the at least two valid PUCCH cells as the target PUCCH cell; or
determining a PUCCH cell with a minimum HARQ-ACK feedback delay among the at least two valid PUCCH cells as the target PUCCH cell.

In the feedback method of this embodiment, the network side device can determine at least one of the following items of the M PUCCH cells in the first PUCCH cell group corresponding to the terminal: a time domain feedback offset set; a valid PUCCH cell corresponding to a specific HARQ-ACK; or a target PUCCH cell corresponding to a specific HARQ-ACK, and the network side device receives the HARQ-ACK based on the determined content. It can be seen that this embodiment of this application provides a feedback mechanism of HARQ-ACK, which ensures implementation of HARQ-ACK feedback, thus shortening the feedback delay of HARQ-ACK.

It should be noted that this embodiment is an embodiment of the network side device corresponding to the foregoing method embodiment in FIG 2. Therefore, reference may be made to the related description in the method embodiment shown in FIG 2, and a same beneficial effect is achieved. To avoid repetition of description, details are not described herein again.

In actual application, the method embodiment of FIG 2 and the method embodiment of FIG 5 can be implemented independently or in combination. In the case of combined implementation, both sides need to understand content, meaning, and length of an HARQ-ACK bit sequence that is fed back in a consistent way. The difference between the two sides is that the terminal side sets and sends values for bits in a bit sequence, and the network side receives and obtains the values.

It should be noted that the plurality of optional implementations described in this embodiment of this application may be implemented in combination with each other or may be implemented separately. This is not limited in this embodiment of this application.

For ease of understanding, an example is illustrated as follows:
when PUCCH carrier switching is used, some feasible schemes are introduced for K1 set configuration and K1 indication, which are described in detail below.
I. K1 set configuration and K1 indication.

As for a specific PUCCH cell group configured for UE, it is assumed that there are M serving cells that can be used to transmit the PUCCH to feed back the HARQ-ACK, which is referred to as the PUCCH cell subsequently. As for each of the M PUCCH cells, the K1 set can be configured in one of the following manners.

K1 set configuration manner 1: the entire PUCCH cell group is configured uniformly and applied to each PUCCH cell.

When understanding each K1 configured in the K1 set, as for the numerology/SCS corresponding to K1, that is, when determining duration of each corresponding slot/sub-slot, one of the following manners can be used.

Numerology determining manner 1-1: based on a reference (Reference) numerology/SCS uniformly determined for the entire PUCCH cell group.

The reference numerology/SCS herein can be determined in one of the following manners.

Numerology determining manner 1-1-1: using a numerology/SCS corresponding to a PCell/PUCCH SCell/PSCell configuration corresponding to a current PUCCH cell group. The numerology/SCS corresponding to the PCell/PUCCH SCell/PSCell configuration can be understood as a numerology/SCS corresponding to a UL Active BWP configuration of the PCell/PUCCH SCell/PSCell or a highest/maximum numerology/SCS (that is, maximum µ) or a lowest/minimum numerology/SCS (that is, minimum µ) in the numerology/SCS corresponding to each UL BWP configuration configured for the PCell/PUCCH SCell/PSCell.

Numerology determining manner 1-1-2: being configured based on higher layer signaling. Optionally, as for a reference numerology/SCS of this configuration, UE can expect a corresponding µ_ref to be less than or equal to µ corresponding to any BWP (which may include the UL BWP and/or the DL BWP) configured in any one of the M PUCCH cells, to avoid Case 2 described below (in Case 2, in a plurality of slots/sub-slots that are based on the reference numerology/SCS and that are corresponding to a single uplink slot/sub-slot on an actually transmitted UCCH cell, there may be a case that if there are more than one reference slot/sub-slot, an HARQ-ACK needs to be fed back based on K1; and when this case is allowed and a corresponding solution exists, this limitation can also be removed).

Numerology determining manner 1-1-3: the highest/maximum numerology/SCS (that is, the maximum µ) corresponding to the M PUCCH cells can be understood as µ corresponding to the PUCCH cell with the maximum µ in the M PUCCH cells. A numerology/SCS corresponding to each PUCCH cell can be understood as a numerology/SCS corresponding to a UL Active BWP configuration of the PUCCH cell or a highest/maximum numerology/SCS (that is, maximum µ) or a lowest/minimum numerology/SCS (that is, minimum µ) in the numerology/SCS corresponding to each UL BWP configuration configured for the PUCCH cell.

Numerology determining manner 1-1-4: the lowest/minimum numerology/SCS (that is, the minimum µ) corresponding to the M PUCCH cells can be understood as µ corresponding to the PUCCH cell with the minimum µ in the M PUCCH cells. A numerology/SCS corresponding to each PUCCH cell can be understood as a numerology/SCS corresponding to a UL Active BWP configuration of the PUCCH cell or a highest/maximum numerology/SCS (that is, maximum µ) or a lowest/minimum numerology/SCS (that is, minimum µ) in the numerology/SCS corresponding to each UL BWP configuration configured for the PUCCH cell.

Numerology determining manner 1-1-5: when PUCCH carrier switching Alt. 2C is used, a reference numerology/SCS corresponding to the configured time domain pattern is used.

Numerology determining manner 1-2: numerology/SCS configured for/ corresponding to each PUCCH cell.

In this case, numerologies/SCSs configured for/corresponding to PUCCH cells may be different, which may cause a PUCCH cell ambiguity problem as described below. A description of the problem and possible solutions can be found in the corresponding description below.

When understanding each K1 configured in the K1 set, a slot/sub-slot granularity can be configured/selected by using one of the following manners.

Time domain granularity determining manner 1-1: it is uniformly configured/determined whether a slot granularity or a sub-slot granularity is used for the entire PUCCH cell group, and the number of symbols occupied by the sub-slot when the sub-slot granularity is used.

In this case, as for any PUCCH cell, when K1 or a K1 set subscript/index is indicated, an HARQ-ACK feedback is exactly equal to a feedback delay (an absolute value thereof) of a time unit for PDSCH receiving, thus avoiding an ambiguity problem of any feedback position in time domain.

Time domain granularity determining manner 1-2: it may be separately configured whether a slot granularity or a sub-slot granularity is used for each PUCCH cell (each UL BWP thereof), and the number of symbols occupied by the sub-slot when the sub-slot granularity is used.

When a physical layer priority is configured, for each UL BWP, it may further be separately configured whether a slot granularity or a sub-slot granularity is used for each physical layer priority, and the number of symbols occupied by the sub-slot when the sub-slot granularity is used. In this case, the feedback delay (absolute value) corresponding to a specific K1 is related to whether a slot granularity or a sub-slot granularity is used, and related to the number of symbols occupied by the sub-slot when the sub-slot granularity is used.

When the numerology determining manner 1-1 is used, a relationship between the numerology/SCS and the reference numerology/SCS of the actually transmitted PUCCH cell can be one of the following cases.

Case 0: being same/consistent.

In this case, based on the configured/indicated K1, time domain of the slot/sub-slot determined based on the reference numerology/SCS completely overlaps with that of an uplink slot/sub-slot on the actually transmitted PUCCH cell. In this case, a corresponding PUCCH resource in the uplink slot/sub-slot is used to perform HARQ-ACK feedback.

Case 1: µ corresponding to the numerology/SCS of the actually transmitted PUCCH cell is large (that is, the SCS is large, and the slot/sub-slot is small).

In this case, based on the configured/indicated K1, the slot /sub-slot determined based on the reference numerology/SCS corresponds to a plurality of uplink slots/sub-slots on the actually transmitted PUCCH cell, as shown in FIG 1 (Alt.2C is used as an example, and it can also be applied to Alt. 1). In this case, it needs to be determined which uplink slot/sub-slot in the plurality of uplink slot/sub-slots is selected to feedback the HARQ-ACK, and one of the following manners can be used.

Manner 1: select a slot/sub-slot that meets a predefined condition; and when there are a plurality of slots/sub-slots that meet the predefined condition, an earliest or first slot/sub-slot among the plurality of slots/sub-slots can be further selected. The predefined condition herein can include one or more of the following:
selecting an earliest slot/sub-slot that can accommodate a PUCCH resource for an HARQ-ACK to be fed back (optionally, another UCI that needs to be multiplexed may be further included). PUCCH resource determination herein requires that corresponding PUCCH transmission or reception can actually be performed, for example, the PUCCH resource does not overlap/conflict with the semi-static DL symbol/SSB/CORESET #0 symbol; and
being greater than or equal to the downlink processing time of the UE, that is, meeting a downlink processing time requirement of the UE. When there are a plurality of slots/sub-slots that meet the condition, one of the plurality of slots/sub-slots can be further selected, that is, an earliest/first sub-slot in the slots/sub-slots that meet the downlink processing time requirement of the UE is selected.

Manner 2: select a first slot/sub-slot, a last slot/sub-slot, a slot/sub-slot with a specified index, or a slot/sub-slot that meets the predefined condition in the plurality of uplink slots/sub-slots. The predefined condition herein can be being greater than or equal to the downlink processing time of the UE, that is, meeting a downlink processing time requirement of the UE. When there are a plurality of slots/sub-slots that meet the condition, one of the plurality of slots/sub-slots can be further selected, that is, an earliest/first sub-slot in the slots/sub-slots that meet the downlink processing time requirement of the UE is selected.

Case 2: µ corresponding to the numerology/SCS of the actually transmitted PUCCH cell is small (that is, the SCS is small, and the slot/sub-slot is large).

In this case, based on the configured/indicated K1, the slot/sub-slot determined based on the reference numerology/SCS may correspond to a single uplink slot/sub-slot on the actually transmitted PUCCH cell. In this case, the single uplink slot/sub-slot can feed back the HARQ-ACK.

In a plurality of slots/sub-slots (which are assumed to be reference slot/sub-slots) that are based on the reference numerology/SCS and that are corresponding to a single uplink slot/sub-slot (which is assumed to be a target (Target) slot/sub-slot) on an actually transmitted PUCCH cell, if there are more than one reference slot/sub-slot, an HARQ-ACK needs to be fed back based on K1, then a corresponding processing scheme needs to be considered for how to transmit HARQ-ACKs corresponding to different reference slots/sub-slots in one target slot/sub-slot. A simple scheme is to cascade the HARQ-ACKs (codebooks) corresponding to different reference slots/sub-slots from end to end in a predefined order (for example, according to a sequence of reference slots/sub-slots), to obtain a single HARQ-ACK codebook, and feed it back in the target slot/sub-slot. Optionally, this case can also be defined as an error case, that is, the UE does not expect that in a plurality of reference slots/sub-slots corresponding to the target slot/sub-slot, if there are more than one reference slot/sub-slot, an HARQ-ACK needs to be fed (in each slot/sub-slot of these reference slots/sub-slots).

K1 set configuration manner 2: configure each PUCCH cell separately.

In this case, each K1 in the K1 set configured for each PUCCH cell is understood based on a numerology/SCS corresponding to the PUCCH cell. Accordingly, it may be separately configured whether a slot granularity or a sub-slot granularity is used for each PUCCH cell (each UL BWP), and the number of symbols occupied by the sub-slot when the sub-slot granularity is used; and when a physical layer priority is configured, for each UL BWP, it may further be separately configured whether a slot granularity or a sub-slot granularity is used for each physical layer priority, and the number of symbols occupied by the sub-slot when the sub-slot granularity is used.

To ensure the downlink scheduling DCI (for example, DCI format 1_1 or DCI format 1_2) corresponding to each DL serving cell in the PUCCH cell group can indicate K1 as needed from a K1 set applied to a specific target PUCCH cell (any one of the M PUCCH cells configured in the PUCCH cell group), the number of bits of a feedback timing indicator domain (for example, a "PDSCH-to-HARQ_feedback timing indicator" field) in the downlink scheduling DCI corresponding to each DL serving cell can be determined in one of the following manners.

Bit number manner 1: being determined based on a maximum number value of K1 in the K1 set configured for each PUCCH cell.

For example, the number of bits in the feedback timing indicator domain=ceiling(log2(Imax)), where Imax is a maximum number value of K1 in the K1 set configured separately for each of the M PUCCH cells configured in the PUCCH cell group, and ceiling() is an upward rounding operation.

Bit number manner 2: being specified in the protocol or configured based on higher layer signaling parameters.

The number of bits can be directly specified in the protocol, for example, 3 bits are fixed.

The number of bits can also be configured by higher layer parameters to be N; and the entire PUCCH cell group can be configured uniformly, or each DL serving cell can be configured separately. During configuration, the network side can guarantee that the configuration of N can make the downlink scheduling DCI corresponding to each (being configured uniformly)/specified (being separately configured) DL serving cell indicate any K1 from a K1 set applied to any PUCCH cell, or the network side does not make the above guarantee. The downlink scheduling DCI corresponding to each/specified DL serving cell indicates a specific K1 from a K1 set applied to a specific PUCCH cell only based on a range where N can be indexed (when N is small, only a subset of the K1 set may actually be used).

When PUCCH carrier switching Alt. 2C is used, the PUCCH cell actually transmitted at a specific moment can be determined based on a configured time domain pattern. The time domain pattern herein can be configured uniformly for the entire PUCCH cell group or configured separately for each PUCCH cell.

As for dynamic scheduling (including PDSCH transmission or reception scheduled by DCI activated/reactivated by SPS):
when the K1 set configuration manner 1 is used, one K1 is selected from the K1 set uniformly configured for the entire PUCCH cell group (when the K1 set includes only one K1, this K1 is directly used without explicit indication in DCI; and otherwise, the selected K1 is explicitly indicated by a field in the DCI).

When the K1 set configuration manner 2 is used, K1 can be determined/indicated in the following manner:
(the network side) firstly determines a time domain position of an HARQ-ACK that needs to be fed back, then determines, based on the time domain pattern, the PUCCH cell actually transmitted at this time domain position (typically only corresponding to a single PUCCH cell), selects one K1 from the K1 set configured for/corresponding to this PUCCH cell (when the K1 set includes only one K1, this K1 is directly used without explicit indication in DCI; and otherwise, the selected K1 is explicitly indicated by a field in the DCI).

II. When the K1 set configuration manner 1, and the numerology determining manner 1-2 or the time domain granularity determining manner 1-2 (that is, lengths of time units may be different for a given K1) are used, or when the K1 set configuration manner 2 is used, there may be a problem that it is ambiguous for the UE in determining the actually transmitted PUCCH cell, as shown in FIG 4a to FIG 4c.

As for FIG 4a to FIG 4c, indication of K1=2 is applicable to both the PUCCH cell 1 and the PUCCH cell 2. In this case, at a switching boundary of the PUCCH cell determined based on the time domain pattern, the UE cannot determine whether to feed back an HARQ-ACK corresponding to a scheduled PDSCH on the PUCCH cell 1 or the PUCCH cell 2, because both the PUCCH cell 1 and the PUCCH cell 2 can meet all conditions of HARQ-ACK feedback (including: determining an HARQ-ACK feedback time domain position based on K1 corresponding to a K1 index indicated by DCI; and at the determined HARQ-ACK feedback time domain position, the PUCCH cell is in an active/available state, and it can be further assumed that both the two PUCCH cells and the PUCCH resource determined based on the HARQ-ACK (and another UCI that needs to be multiplexed) are legal, that is, actual transmission or reception can be performed based on relevant rules of the TDD pattern).

It is assumed that for a given time domain position, a specific PUCCH cell is regarded as a valid PUCCH cell when it meets at least one of the following conditions.

Cell condition 1: based on the configured time domain pattern, this PUCCH cell is in an active/available state at this time domain position.

Cell condition 2: in this time domain position, the PUCCH resource determined based on the HARQ-ACK to be fed back (and another UCI that needs to be multiplexed) can be used to actually transmit the corresponding PUCCH based on the relevant rules of the TDD pattern.

To solve or avoid the ambiguity problem, one of the following manners can be used.

Processing manner 1: (the network side) ensures that only one PUCCH cell is valid.

In this case, the network side can avoid the ambiguity problem through configuration or indication (namely, an implementation manner), so as to ensure that only a single PUCCH cell is determined as a valid PUCCH cell based on the determined K1 and the time domain pattern. This may bring a great limitation to parameter configuration or DCI indication.

Processing manner 2: when determining that there are a plurality of valid PUCCH cells, the UE introduces a predefined rule to further select a single PUCCH cell from the plurality of valid PUCCH cells.

The predefined rule herein can be specified in the protocol or configured based on higher layer signaling, and one of the following rules can be used:
selecting a PUCCH cell with a minimum/maximum cell index; or
selecting a PUCCH cell with a minimum HARQ-ACK feedback delay.

When a PUCCH cell is selected herein, the HARQ-ACK feedback delay can be determined based on the start/end time of the PUCCH resource respectively determined on PUCCH cells.

Processing manner 3: there is a PUCCH cell indication in the scheduling DCI to explicitly indicate the actually transmitted PUCCH cell.

The PUCCH cell indication in the DCI may indicate the cell index corresponding to the PUCCH cell, or a local index of the PUCCH cell in the M PUCCH cells (the M PUCCH cells may be sorted based on the cell index, for example, in an ascending order).

In this case, the PUCCH cell indicated by using the DCI is required to be consistent with the PUCCH cell determined based on the time domain pattern, that is, the indicated PUCCH cell is in the time domain position determined based on K1, and is in the active/available state based on the time domain pattern. For example, the PUCCH cell indicated by the DCI is a single active/available PUCCH cell that is determined based on the time domain pattern and that is in a time domain position corresponding to a K1 position based on the time domain pattern, or one of one or more active/available PUCCH cells that are determined based on the time domain pattern and that are in a time domain position corresponding to a K1 position based on the time domain pattern.

Optionally, it is not required whether the PUCCH cell indicated by the DCI is consistent with the PUCCH cell determined based on the time domain pattern. In this case, the PUCCH cell that is actually transmitted by using HARQ-ACK feedback is determined based on the PUCCH cell indicated by the DCI, that is, the PUCCH cell determined based on the time domain pattern can be overridden (Override) by using the DCI indication.

Processing manner 4: when the UE determines that there are a plurality of valid PUCCH cells, a feedback is given on each valid PUCCH cell.

In this case, each valid PUCCH cell feeds back the HARQ-ACK corresponding to the same PDSCH transmission or reception (possibly including another HARQ-ACK/UCI) within a corresponding slot/sub-slot determined based on K1.

Processing manner 5: when the UE determines that there are a plurality of valid PUCCH cells, the UE gives a feedback on a single (or at least one, allowing more than one) valid PUCCH cell.

The UE selects one (or at least one, allowing more than one) valid PUCCH cell from a plurality of valid PUCCH cells based on implementation, and feeds back the HARQ-ACK (possibly including another HARQ-ACK/UCI) within a corresponding slot/sub-slot determined based on K1 on the selected (each) PUCCH cell. When the UE is allowed to select a plurality of valid PUCCH cells, the HARQ-ACK corresponding to the same PDSCH transmission or reception is fed back on each selected PUCCH cell.

In this case, the network side can determine the valid PUCCH cell actually selected by the UE through blind detection.

A Type-1 codebook may be organized on a specific PUCCH cell based on a K1 set applied in this PUCCH cell. When K1 corresponding to the HARQ-ACK that needs to be fed back on this PUCCH cell is not in the K1 set applied to the PUCCH cell (currently, it is considered that these HARQ-ACKs include only SPS HARQ-ACK), after determining an HARQ-ACK bit sequence corresponding to the Type-1 codebook based on a Rel-15/16 pseudo-code flow, an HARQ-ACK bit sequence corresponding to the SPS HARQ-ACK is inserted in a predefined position of this HARQ-ACK bit sequence (for example, at the beginning or at the end), and an obtained total HARQ-ACK bit sequence is used as the transmitted HARQ-ACK.

It can be seen that the embodiments of this application include the following content.

As for the K1 set configuration and the K1 indication operation of PUCCH carrier switching, a corresponding solution is introduced.
I. As for each of the M PUCCH cells configured for the UE, the K1 set can be configured in one of the following manners:
   K1 set configuration manner 1: the entire PUCCH cell group is configured uniformly and applied to each PUCCH cell; or
   when understanding each K1 configured in the K1 set, as for the numerology/SCS corresponding to a K1, that is, when determining duration of each corresponding slot/sub-slot, one of the following manners can be used:
      Numerology determining manner 1-1: based on a reference numerology/SCS uniformly determined for the entire PUCCH cell group; or
      Numerology determining manner 1-2: numerology/SCS configured for/ corresponding to each PUCCH cell.

As for each of the M PUCCH cells configured for the UE, a slot/sub-slot granularity can be configured/selected by using one of the following manners.

Time domain granularity determining manner 1-1: it is uniformly configured/determined whether a slot granularity or a sub-slot granularity is used for the entire PUCCH cell group, and the number of symbols occupied by the sub-slot when the sub-slot granularity is used.

Time domain granularity determining manner 1-2: it may be separately configured whether a slot granularity or a sub-slot granularity is used for each PUCCH cell (each UL BWP thereof), and the number of symbols occupied by the sub-slot when the sub-slot granularity is used.

When the numerology determining manner 1-1 is used, based on the relationship between the numerology/SCS and the reference numerology/SCS of the actually transmitted PUCCH cell, three cases are distinguished for corresponding processing.

K1 set configuration manner 2: configure each PUCCH cell separately.

The number of bits of a feedback timing indicator domain in the downlink scheduling DCI can be determined in one of the following manners.

Bit number manner 1: being determined based on a maximum number value of K1 in the K1 set configured for each PUCCH cell.

Bit number manner 2: being specified in the protocol or configured based on higher layer signaling parameters.

II. It is assumed that for a given time domain position, a specific PUCCH cell is regarded as a valid PUCCH cell when it meets at least one of the following conditions.

Cell condition 1: based on the configured time domain pattern, this PUCCH cell is in an active/available state at this time domain position.

Cell condition 2: in this time domain position, the PUCCH resource determined based on the HARQ-ACK to be fed back (and another UCI that needs to be multiplexed) can be used to actually transmit the corresponding PUCCH based on the relevant rules of the TDD pattern.

III. To solve or avoid the ambiguity problem occurs when the UE determines the actually transmitted PUCCH cell, one of the following manners can be used.

Processing manner 1: (the network side) ensures that only one PUCCH cell is valid.

Processing manner 2: when determining that there are a plurality of valid PUCCH cells, the UE further selects a single PUCCH cell from the plurality of valid PUCCH cells based on a predefined rule or an introduced rule.

Processing manner 3: there is a PUCCH cell indication in the scheduling DCI to explicitly indicate the actually transmitted PUCCH cell.

Processing manner 4: when the UE determines that there are a plurality of valid PUCCH cells, a feedback is given on each valid PUCCH cell.

Processing manner 5: when the UE determines that there are a plurality of valid PUCCH cells, the UE gives a feedback on a single (or at least one) valid PUCCH cell.

According to this embodiment of this application, corresponding solutions are introduced for K1 set configuration and K1 indication of PUCCH carrier switching, so as to ensure that the PUCCH carrier switching mechanism is concrete and feasible, thereby shortening the HARQ-ACK feedback delay.

It should be noted that the feedback method provided in this embodiment of this application may be performed by a feedback apparatus, or a control module that is in the feedback apparatus and that is configured to perform the feedback method. In this embodiment of this application, the feedback apparatus provided in this embodiment of this application is described by using an example in which the feedback apparatus performs the feedback method.

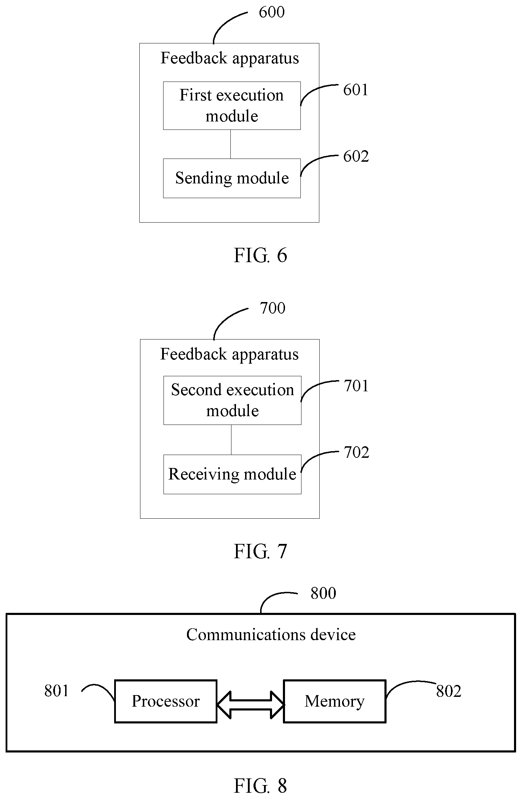

As shown in FIG 6, a feedback apparatus 600 includes:
a first execution module 601, configured to: in a case that a first physical uplink control channel (PUCCH) cell group corresponding to a terminal includes M PUCCH cells available for transmitting a hybrid automatic repeat request acknowledgement (HARQ-ACK), and M is an integer greater than 1, perform a first operation; and
a sending module 602, configured to send a first HARQ-ACK based on the first operation, where
the first operation includes at least one of the following:
   determining a time domain feedback offset set corresponding to each of the M PUCCH cells;
   determining valid PUCCH cell(s) corresponding to the first HARQ-ACK among the M PUCCH cells; or
   determining target PUCCH cell(s) corresponding to the first HARQ-ACK among the M PUCCH cells.

Optionally, time domain feedback offset sets corresponding to the M PUCCH cells are configured uniformly or separately.

Optionally, the time domain feedback offset sets corresponding to the M PUCCH cells are uniformly configured as a first time domain feedback offset set; and
a first object corresponding to the first time domain feedback offset set is configured uniformly or separately for the M PUCCH cells, where
the first object is a numerology or a subcarrier spacing (SCS).

Optionally, in a case that the first object corresponding to the first time domain feedback offset set is configured uniformly for the M PUCCH cells, the first object corresponding to the first time domain feedback offset set is determined based on a reference object, and the reference object is a reference numerology or a reference SCS.

Optionally, the reference object meets one of the following:
the reference object is a first object corresponding to a first cell, and the first cell is a primary cell, a primary secondary cell, or a PUCCH secondary cell corresponding to the first PUCCH cell group;
the reference object is configured by higher layer signaling;
the reference object is a first object with a maximum index corresponding to the M PUCCH cells;
the reference object is a first object with a minimum index corresponding to the M PUCCH cells; or
in a case that a PUCCH cell is switched semi-statically based on a time domain pattern, the reference object is a first object corresponding to the time domain pattern.

Optionally, in a case that the reference object is configured by the higher layer signaling, an index of the reference object is less than or equal to an index of a first object corresponding to any BWP configured in any one of the M PUCCH cells.

Optionally, the sending module 602 is specifically configured to:
determine a first time unit based on a target time domain feedback offset and the reference object, where the target time domain feedback offset is one time domain feedback offset in the first time domain feedback offset set;
determine a target time unit of the target PUCCH cell based on a correspondence between the first time unit and time unit(s) of the target PUCCH cell; and
send the first HARQ-ACK in the target time unit.

Optionally, the correspondence is determined based on a comparison relationship between a first index of a first object corresponding to the target PUCCH cell and a second index of the reference object.

Optionally, the correspondence meets one of the following:
in a case that the first index is less than or equal to the second index, the first time unit corresponds to the target time unit; or
in a case that the first index is greater than the second index, the first time unit corresponds to Q time units of the target PUCCH cell, the target time unit is one of the Q time units, and Q is an integer greater than 1.

Optionally, in a case that the first time unit corresponds to the Q time units of the target PUCCH cell, the determining a target time unit of the target PUCCH cell based on a correspondence between the first time unit and time unit(s) of the target PUCCH cell includes one of the following:
determining the target time unit of the target PUCCH cell based on time unit(s) that meets a first condition among the Q time units, where the first condition includes at least one of the following: being able to accommodate a first PUCCH resource, where the first PUCCH resource includes a PUCCH resource corresponding to the first HARQ-ACK; or meeting a downlink processing time requirement of the terminal; or
determining a time unit with an index of a maximum value, a minimum value, or a preset value among the Q time units as the target time unit of the target PUCCH cell.

Optionally, the determining the target time unit based on time unit(s) that meets a first condition among the Q time units includes at least one of the following:
in a case that the number of time units that meet the first condition among the Q time units is 1, determining the time unit that meets the first condition as the target time unit; or
in a case that the number of time units that meet the first condition among the Q time units is greater than 1, determining a time unit with an index of a maximum value, a minimum value, or a preset value among the time units that meet the first condition as the target time unit.

Optionally, in a case that the first object corresponding to the first time domain feedback offset set is configured separately for the M PUCCH cells, for a first PUCCH cell, the first object corresponding to the first time domain feedback offset set is determined based on the first object corresponding to the first PUCCH cell, and the first PUCCH cell is any one of the M PUCCH cells.

Optionally, the time domain feedback offset sets corresponding to the M PUCCH cells are uniformly configured as a first time domain feedback offset set; and
a second object corresponding to the first time domain feedback offset set is configured uniformly or separately for the M PUCCH cells, where
the second object includes at least one of the following: a time domain granularity; or the number of symbols corresponding to a sub-slot.

Optionally, in a case that the second object corresponding to the first time domain feedback offset set is configured separately for the M PUCCH cells, and the second PUCCH cell is configured with physical layer priority(ies), for each uplink bandwidth part (BWP) corresponding to the second PUCCH cell, the second object corresponding to the first time domain feedback offset set is configured separately for each physical layer priority, and the second PUCCH cell is any one of the M PUCCH cells.

Optionally, in a case that the time domain feedback offset sets corresponding to the M PUCCH cells are configured separately, both a first object and a second object that are corresponding to the second time domain feedback offset set are configured separately for the M PUCCH cells, where
the second time domain feedback offset set is a time domain feedback offset set corresponding to any one of the M PUCCH cells; the first object is a numerology or a subcarrier spacing (SCS); and the second object includes at least one of the following: a time domain granularity; or the number of symbols corresponding to a sub-slot.

Optionally, in a case that the time domain feedback offset sets corresponding to the M PUCCH cells are configured separately, the number of bits of a first field in first DCI meets one of the following:
being determined based on a maximum number in first number(s), where the first number(s) includes the number of time domain feedback offsets in a time domain feedback offset set corresponding to each of the M PUCCH cells; or
being specified by a protocol or configured by higher layer signaling, where
the first DCI is downlink scheduling DCI of any serving cell in the first PUCCH cell group, and the first field is used to indicate an index of a time domain feedback offset.

Optionally, in a case that the number of bits of the first field is configured by the higher layer signaling, the number of bits of the first field in the downlink scheduling DCI of each serving cell in the first PUCCH cell group is configured uniformly or separately.

Optionally, the determining valid PUCCH cell(s) corresponding to the first HARQ-ACK among the M PUCCH cells includes:
in a case that a second PUCCH cell in the PUCCH cells meets a first condition, determining a third PUCCH cell as the valid PUCCH cell corresponding to the first HARQ-ACK, where
the first condition includes at least one of the following:
   based on a time domain pattern, the third PUCCH cell is in an available state at the feedback time domain position of the first HARQ-ACK; or
   based on a time division duplex (TDD) pattern rule, the third PUCCH cell is in an available state at the feedback time domain position of the first HARQ-ACK.

Optionally, the determining target PUCCH cell(s) corresponding to the first HARQ-ACK among the M PUCCH cells includes at least one of following:
in a case that the M PUCCH cells include only one valid PUCCH cell corresponding to the first HARQ-ACK, determining the valid PUCCH cell as the target PUCCH cell;
in a case that the M PUCCH cells include at least two valid PUCCH cells corresponding to the first HARQ-ACK, selecting, based on a first rule, one valid PUCCH cell from the at least two valid PUCCH cells as the target PUCCH cell;
selecting the target PUCCH cell from the M PUCCH cells based on second DCI, where the second DCI indicates the target PUCCH cell; and
determining all or a part of valid PUCCH cells corresponding to the first HARQ-ACK among the M PUCCH cells as target PUCCH cells.

Optionally, the first rule includes at least one of the following:
determining a PUCCH cell with a minimum or maximum PUCCH cell index among the at least two valid PUCCH cells as the target PUCCH cell; or
determining a PUCCH cell with a minimum HARQ-ACK feedback delay among the at least two valid PUCCH cells as the target PUCCH cell.

The feedback apparatus in this embodiment of this application may be an apparatus or an apparatus or electronic device with an operating system, or may be a component, an integrated circuit, or a chip in a terminal. The apparatus or electronic device may be a mobile terminal, or a non-mobile terminal. For example, the mobile terminal may include, but is not limited to the type of the terminal 11 listed above. The non-mobile terminal may be a server, a network attached storage (Network Attached Storage, NAS) device, a personal computer (personal computer, PC), a television (television, TV), a teller machine, a self-service machine, or the like. This is not specifically limited in the embodiments of this application.

The feedback apparatus 600 provided in this embodiment of this application can implement the processes implemented in the method embodiment of FIG 2, and a same technical effect can be achieved. To avoid repetition, details are not described herein again.

As shown in FIG 7, a feedback apparatus 700 includes:
a second execution module 701, configured to: in a case that a first physical uplink control channel (PUCCH) cell group corresponding to a terminal includes M PUCCH cells available for transmitting a hybrid automatic repeat request acknowledgement (HARQ-ACK), and M is an integer greater than 1, perform a first operation; and
a receiving module 702, configured to receive a first HARQ-ACK, where
the first operation includes at least one of the following:
   determining a time domain feedback offset set corresponding to each of the M PUCCH cells;
   determining valid PUCCH cell(s) corresponding to the first HARQ-ACK among the M PUCCH cells; or
   determining target PUCCH cell(s) corresponding to the first HARQ-ACK among the M PUCCH cells.

Optionally, time domain feedback offset sets corresponding to the M PUCCH cells are configured uniformly or separately.

Optionally, the time domain feedback offset sets corresponding to the M PUCCH cells are uniformly configured as a first time domain feedback offset set; and
a first object corresponding to the first time domain feedback offset set is configured uniformly or separately for the M PUCCH cells, where
the first object is a numerology or a subcarrier spacing (SCS).

Optionally, in a case that the first object corresponding to the first time domain feedback offset set is configured uniformly for the M PUCCH cells, the first object corresponding to the first time domain feedback offset set is determined based on a reference object, and the reference object is a reference numerology or a reference SCS.

Optionally, the reference object meets one of the following:
the reference object is a first object corresponding to a first cell, and the first cell is a primary cell, a primary secondary cell, or a PUCCH secondary cell corresponding to the first PUCCH cell group;
the reference object is configured by higher layer signaling;
the reference object is a first object with a maximum index corresponding to the M PUCCH cells;
the reference object is a first object with a minimum index corresponding to the M PUCCH cells; or
in a case that a PUCCH cell is switched semi-statically based on a time domain pattern, the reference object is a first object corresponding to the time domain pattern.

Optionally, in a case that the reference object is configured by the higher layer signaling, an index of the reference object is less than or equal to an index of a first object corresponding to any BWP configured in any one of the M PUCCH cells.

Optionally, the receiving module 702 is specifically configured to:
determine a first time unit based on a target time domain feedback offset and the reference object, where the target time domain feedback offset is one time domain feedback offset in the first time domain feedback offset set;
determine a target time unit of the target PUCCH cell based on a correspondence between the first time unit and time unit(s) of the target PUCCH cell; and
receive the first HARQ-ACK in the target time unit.

Optionally, the correspondence is determined based on a comparison relationship between a first index of a first object corresponding to the target PUCCH cell and a second index of the reference object.

Optionally, the correspondence meets one of the following:
in a case that the first index is less than or equal to the second index, the first time unit corresponds to the target time unit; or
in a case that the first index is greater than the second index, the first time unit corresponds to Q time units of the target PUCCH cell, the target time unit is one of the Q time units, and Q is an integer greater than 1.

Optionally, in a case that the first time unit corresponds to the Q time units of the target PUCCH cell, the determining a target time unit of the target PUCCH cell based on a correspondence between the first time unit and time unit(s) of the target PUCCH cell includes one of the following:
determining the target time unit of the target PUCCH cell based on time unit(s) that meets a first condition among the Q time units, where the first condition includes at least one of the following: being able to accommodate a first PUCCH resource, where the first PUCCH resource includes a PUCCH resource corresponding to the first HARQ-ACK; or meeting a downlink processing time requirement of the terminal; or
determining a time unit with an index of a maximum value, a minimum value, or a preset value among the Q time units as the target time unit of the target PUCCH cell.

Optionally, the determining the target time unit based on time unit(s) that meets a first condition among the Q time units includes at least one of the following:
in a case that the number of time units that meet the first condition among the Q time units is 1, determining the time unit that meets the first condition as the target time unit; or
in a case that the number of time units that meet the first condition among the Q time units is greater than 1, determining a time unit with an index of a maximum value, a minimum value, or a preset value among the time units that meet the first condition as the target time unit.

Optionally, in a case that the first object corresponding to the first time domain feedback offset set is configured separately for the M PUCCH cells, for a first PUCCH cell, the first object corresponding to the first time domain feedback offset set is determined based on the first object corresponding to the first PUCCH cell, and the first PUCCH cell is any one of the M PUCCH cells.

Optionally, the time domain feedback offset sets corresponding to the M PUCCH cells are uniformly configured as a first time domain feedback offset set; and
a second object corresponding to the first time domain feedback offset set is configured uniformly or separately for the M PUCCH cells, where
the second object includes at least one of the following: a time domain granularity; or the number of symbols corresponding to a sub-slot.

Optionally, in a case that the second object corresponding to the first time domain feedback offset set is configured separately for the M PUCCH cells, and the second PUCCH cell is configured with physical layer priority(ies), for each uplink bandwidth part (BWP) corresponding to the second PUCCH cell, the second object corresponding to the first time domain feedback offset set is configured separately for each physical layer priority, and the second PUCCH cell is any one of the M PUCCH cells.

Optionally, in a case that the time domain feedback offset sets corresponding to the M PUCCH cells are configured separately, both a first object and a second object that are corresponding to the second time domain feedback offset set are configured separately for the M PUCCH cells, where
the second time domain feedback offset set is a time domain feedback offset set corresponding to any one of the M PUCCH cells; the first object is a numerology or a subcarrier spacing (SCS); and the second object includes at least one of the following: a time domain granularity; or the number of symbols corresponding to a sub-slot.

Optionally, in a case that the time domain feedback offset sets corresponding to the M PUCCH cells are configured separately, the number of bits of a first field in first DCI meets one of the following:
being determined based on a maximum number in first number(s), where the first number(s) includes the number of time domain feedback offsets in a time domain feedback offset set corresponding to each of the M PUCCH cells; or
being specified by a protocol or configured by higher layer signaling, where
the first DCI is downlink scheduling DCI of any serving cell in the first PUCCH cell group, and the first field is used to indicate an index of a time domain feedback offset.

Optionally, in a case that the number of bits of the first field is configured by the higher layer signaling, the number of bits of the first field in the downlink scheduling DCI of each serving cell in the first PUCCH cell group is configured uniformly or separately.

Optionally, the determining valid PUCCH cell(s) corresponding to the first HARQ-ACK among the M PUCCH cells includes:
in a case that a second PUCCH cell in the PUCCH cells meets a first condition, determining a third PUCCH cell as the valid PUCCH cell corresponding to the first HARQ-ACK, where
the first condition includes at least one of the following:
   based on a time domain pattern, the third PUCCH cell is in an available state at the feedback time domain position of the first HARQ-ACK; or
   based on a time division duplex (TDD) pattern rule, the third PUCCH cell is in an available state at the feedback time domain position of the first HARQ-ACK.

Optionally, the determining target PUCCH cell(s) corresponding to the first HARQ-ACK among the M PUCCH cells includes at least one of following:
in a case that the M PUCCH cells include only one valid PUCCH cell corresponding to the first HARQ-ACK, determining the valid PUCCH cell as the target PUCCH cell;
in a case that the M PUCCH cells include at least two valid PUCCH cells corresponding to the first HARQ-ACK, selecting, based on a first rule, one valid PUCCH cell from the at least two valid PUCCH cells as the target PUCCH cell;
selecting the target PUCCH cell from the M PUCCH cells based on second DCI, where the second DCI indicates the target PUCCH cell; and
determining all or a part of valid PUCCH cells corresponding to the first HARQ-ACK among the M PUCCH cells as target PUCCH cells.

Optionally, the first rule includes at least one of the following:
determining a PUCCH cell with a minimum or maximum PUCCH cell index among the at least two valid PUCCH cells as the target PUCCH cell; or
determining a PUCCH cell with a minimum HARQ-ACK feedback delay among the at least two valid PUCCH cells as the target PUCCH cell.

The feedback apparatus in this embodiment of this application may be an apparatus or an apparatus or electronic device with an operating system, or may be a component, an integrated circuit, or a chip in a network side device. The network side device may include, but is not limited to, the types of network side device 12 listed above, which is not specifically limited in this embodiment of this application.

The feedback apparatus 700 provided in this embodiment of this application can implement the processes implemented in the method embodiment of FIG 5, and a same technical effect can be achieved. To avoid repetition, details are not described herein again.

Optionally, as shown in FIG 8, an embodiment of this application further provides a communications device 800, including a processor 801, a memory 802, and a program or an instruction stored in the memory 802 and executable on the processor 801. For example, in a case that the communications device 800 is a terminal, when the program or the instruction is executed by the processor 801, the processes of the foregoing method embodiments in FIG 2 are implemented, with the same technical effects achieved. In a case that the communications device 800 is a network side device, when the program or the instructions are executed by the processor 801, each process of the method embodiment in FIG 5 is implemented, and a same technical effect is achieved. To avoid repetition, details are not described herein again.

An embodiment of this application further provides a terminal, including a processor and a communications interface, where
the processor is configured to:
in a case that a first physical uplink control channel (PUCCH) cell group corresponding to a terminal includes M PUCCH cells available for transmitting a hybrid automatic repeat request acknowledgement (HARQ-ACK), and M is an integer greater than 1, perform a first operation; and
the communications interface is configured to:
   send a first HARQ-ACK based on the first operation, where
   the first operation includes at least one of the following:
      determining a time domain feedback offset set corresponding to each of the M PUCCH cells;
      determining valid PUCCH cell(s) corresponding to the first HARQ-ACK among the M PUCCH cells; or
      determining target PUCCH cell(s) corresponding to the first HARQ-ACK among the M PUCCH cells.

This terminal embodiment corresponds to the foregoing method embodiment on the terminal side. Each implementation process and implementation of the foregoing method embodiment may be applicable to this terminal embodiment, and a same technical effect can be achieved.

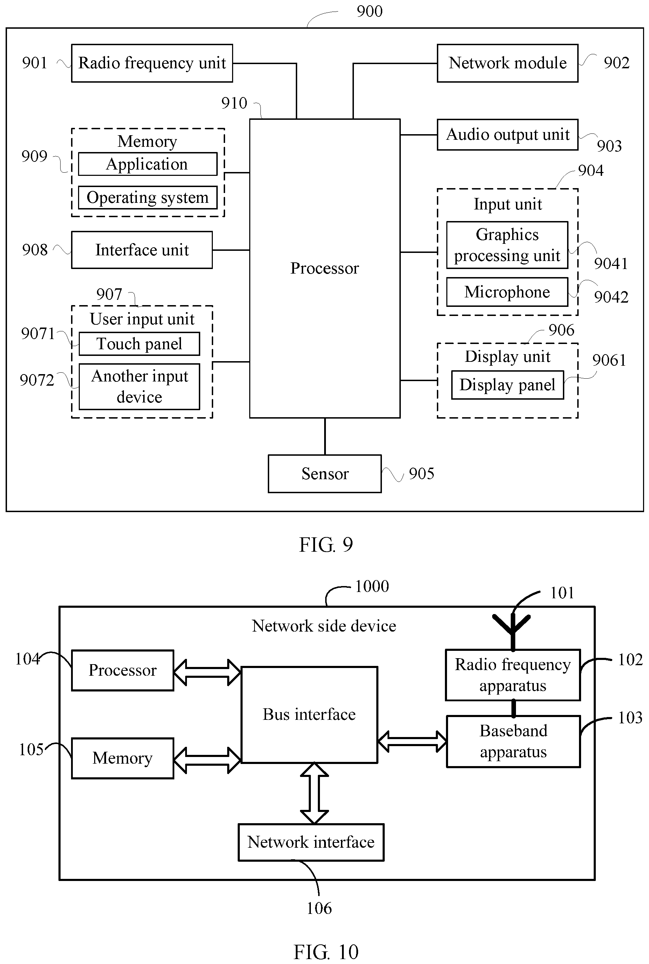

Specifically, FIG 9 is a schematic diagram of a hardware structure of a terminal according to an embodiment of this application.

A terminal 900 includes but is not limited to at least a part of components such as a radio frequency unit 901, a network module 902, an audio output unit 903, an input unit 904, a sensor 905, a display unit 906, a user input unit 907, an interface unit 909, a memory 909, and a processor 910.

A person skilled in the art can understand that the terminal 900 may further include a power supply (such as a battery) that supplies power to each component. The power supply may be logically connected to the processor 910 by using a power supply management system, to implement functions such as charging and discharging management, and power consumption management by using the power supply management system. The terminal structure shown in FIG 9 constitutes no limitation on the terminal, and the terminal may include more or fewer components than those shown in the figure, or combine some components, or have different component arrangements. Details are not described herein.

It should be understood that in this embodiment of this application, the input unit 904 may include a graphics processing unit (Graphics Processing Unit, GPU) 9041 and a microphone 9042. The graphics processing unit 9041 processes image data of a static picture or a video obtained by an image capture apparatus (for example, a camera) in a video capture mode or an image capture mode. The display unit 906 may include a display panel 9061, and the display panel 9061 may be configured in a form of a liquid crystal display, an organic light-emitting diode, or the like. The user input unit 907 includes a touch panel 9071 and another input device 9072. The touch panel 9071 is also referred to as a touchscreen. The touch panel 9071 may include two parts: a touch detection apparatus and a touch controller. The another input device 9072 may include but is not limited to a physical keyboard, a functional button (such as a volume control button or a power on/off button), a trackball, a mouse, and a joystick. Details are not described herein.

In this embodiment of this application, the radio frequency unit 901 receives downlink data from a network side device and then sends the downlink data to the processor 910 for processing; and sends uplink data to the network side device. Usually, the radio frequency unit 901 includes but is not limited to an antenna, at least one amplifier, a transceiver, a coupler, a low noise amplifier, a duplexer, and the like.

The memory 909 may be configured to store a software program or an instruction and various data. The memory 909 may mainly include a program or instruction storage area and a data storage area. The program or instruction storage area may store an operating system, and an application or an instruction required by at least one function (for example, a sound playing function or an image playing function). In addition, the memory 909 may include a high-speed random access memory, and may further include a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory, for example, at least one disk storage device, a flash memory device, or another non-volatile solid-state storage device.

The processor 910 may include one or more processing units. Optionally, the processor 910 may integrate an application processor and a modem processor. The application processor mainly processes an operating system, a user interface, an application, instructions, and the like. The modem processor mainly processes wireless communication, such as a baseband processor. It may be understood that the modem processor may alternatively be not integrated in the processor 910.

The processor 910 is configured to:
in a case that a first physical uplink control channel (PUCCH) cell group corresponding to a terminal includes M PUCCH cells available for transmitting a hybrid automatic repeat request acknowledgement (HARQ-ACK), and M is an integer greater than 1, perform a first operation; and
the radio frequency unit 901 is configured to:
   send a first HARQ-ACK based on the first operation, where
   the first operation includes at least one of the following:
      determining a time domain feedback offset set corresponding to each of the M PUCCH cells;
      determining valid PUCCH cell(s) corresponding to the first HARQ-ACK among the M PUCCH cells; or
      determining target PUCCH cell(s) corresponding to the first HARQ-ACK among the M PUCCH cells.

It should be noted that the terminal 900 in this embodiment may implement each process in the method embodiment of FIG 2 in embodiments of this application, and a same beneficial effect is achieved. To avoid repetition, details are not described herein again.

An embodiment of this application further provides a network side device, including a processor and a communications interface, where
the processor is configured to:
in a case that a first physical uplink control channel (PUCCH) cell group corresponding to a terminal includes M PUCCH cells available for transmitting a hybrid automatic repeat request acknowledgement (HARQ-ACK), and M is an integer greater than 1, perform a first operation; and
the communications interface is configured to:
   receive a first HARQ-ACK based on the first operation, where
   the first operation includes at least one of the following:
      determining a time domain feedback offset set corresponding to each of the M PUCCH cells;
      determining valid PUCCH cell(s) corresponding to the first HARQ-ACK among the M PUCCH cells; or
      determining target PUCCH cell(s) corresponding to the first HARQ-ACK among the M PUCCH cells.

This network side device embodiment corresponds to the foregoing method embodiment on the network side device. Each implementation process and implementation of the foregoing method embodiment may be applicable to this network side device embodiment, and a same technical effect can be achieved.

Specifically, an embodiment of this application further provides a network side device. As shown in FIG 10, a network device 1000 includes an antenna 101, a radio frequency apparatus 102, and a baseband apparatus 103. The antenna 101 is connected to the radio frequency apparatus 102. In an uplink direction, the radio frequency apparatus 102 receives information by using the antenna 101, and sends the received information to the baseband apparatus 103 for processing. In a downlink direction, the baseband apparatus 103 processes information that needs to be sent, and sends processed information to the radio frequency apparatus 102. The radio frequency apparatus 102 processes the received information, and sends processed information by using the antenna 101.

The frequency band processing apparatus may be located in the baseband apparatus 103. The method performed by the network side device in the foregoing embodiment may be implemented in the baseband apparatus 103. The baseband apparatus 103 includes a processor 104 and a memory 105.

The baseband apparatus 103 may include, for example, at least one baseband board, where a plurality of chips are disposed on the baseband board. As shown in FIG 10, one chip is, for example, the processor 104, which is connected to the memory 105, so as to invoke a program in the memory 105 to perform operations of the network device shown in the foregoing method embodiment.

The baseband apparatus 103 may further include a network interface 106, configured to exchange information with the radio frequency apparatus 102, where the interface is, for example, a common public radio interface (common public radio interface, CPRI).

Specifically, the network side device in this embodiment of this application further includes: an instruction or a program stored in the memory 105 and executable on the processor 104, and the processor 104 invokes the instruction or program in the memory 105 to perform each process of the method embodiment in FIG 5 or the method performed by the modules shown in FIG 6, and a same technical effect is achieved. To avoid repetition, details are not described herein again.

An embodiment of this application further provides a computer-readable storage medium. The computer-readable storage medium stores a computer program, and when the computer program is executed by a processor, the processes of the foregoing feedback or feedback method embodiment are implemented and a same technical effect can be achieved. To avoid repetition, details are not described herein again. The computer-readable storage medium is, for example, a read-only memory (Read-Only Memory, ROM), a random access memory (Random Access Memory, RAM), a magnetic disk, or an optical disc.

An embodiment of this application further provides a readable storage medium. The readable storage medium stores a program or instructions. When the program or the instructions are executed by a processor, each process in the method embodiment in FIG 2 or FIG 5 is implemented, and a same technical effect is achieved. To avoid repetition, details are not described herein again.

The processor is a processor in the terminal in the foregoing embodiment. The readable storage medium includes a computer-readable storage medium, such as a computer read-only memory (Read-Only Memory, ROM), a random access memory (Random Access Memory, RAM), a magnetic disk, or an optical disc.

An embodiment of this application further provides a chip. The chip includes a processor and a communications interface. The communications interface is coupled to the processor, the processor is configured to run a program or an instruction, to implement the processes of the foregoing method embodiment shown in FIG 2 or FIG 5, and a same technical effect can be achieved. To avoid repetition, details are not described herein again.

It should be understood that the chip mentioned in this embodiment of this application may also be referred to as a system-level chip, a system chip, a chip system, or an on-chip system chip.

It should be noted that, in this specification, the term "include", "comprise", or any other variant thereof is intended to cover a non-exclusive inclusion, so that a process, a method, an article, or an apparatus that includes a list of elements not only includes those elements but also includes other elements which are not expressly listed, or further includes elements inherent to such process, method, article, or apparatus. In absence of more constraints, an element preceded by "includes a..." does not preclude the existence of other identical elements in the process, method, article, or apparatus that includes the element. In addition, it should be noted that the scope of the method and the apparatus in the embodiments of this application is not limited to performing functions in an illustrated or discussed sequence, and may further include performing functions in a basically simultaneous manner or in a reverse sequence according to the functions concerned. For example, the described method may be performed in an order different from that described, and the steps may be added, omitted, or combined. In addition, features described with reference to some examples may be combined in other examples.

Based on the descriptions of the foregoing implementations, a person skilled in the art may clearly understand that the method in the foregoing embodiment may be implemented by software in addition to a necessary universal hardware platform or by hardware only. In most circumstances, the former is a preferred implementation. Based on such an understanding, the technical solutions of this application essentially or the part contributing to the prior art may be implemented in a form of a computer software product. The computer software product is stored in a storage medium (such as a ROM/RAM, a hard disk, or an optical disc), and includes several instructions for instructing a terminal (which may be a mobile phone, a computer, a server, an air-conditioner, a network device, or the like) to perform the method described in the embodiments of this application.

Embodiments of this application are described above with reference to the accompanying drawings, but this application is not limited to the foregoing implementations. The foregoing embodiments are only illustrative rather than restrictive. Inspired by this application, a person of ordinary skill in the art can still derive many variations without departing from the essence of this application and the protection scope of the claims. All these variations shall fall within the protection of this application.

## Claims

1. A feedback method, comprising:
in a case that a first physical uplink control channel (PUCCH) cell group corresponding to a terminal comprises M PUCCH cells available for transmitting a hybrid automatic repeat request acknowledgement (HARQ-ACK), and M is an integer greater than 1, performing, by the terminal, a first operation; and
sending, by the terminal, a first HARQ-ACK based on the first operation, wherein
the first operation comprises at least one of the following:
determining a time domain feedback offset set corresponding to each of the M PUCCH cells;
determining valid PUCCH cell(s) corresponding to the first HARQ-ACK among the M PUCCH cells; or
determining target PUCCH cell(s) corresponding to the first HARQ-ACK among the M PUCCH cells.

2. The method according to claim 1, wherein time domain feedback offset sets corresponding to the M PUCCH cells are configured uniformly or separately.

3. The method according to claim 2, wherein the time domain feedback offset sets corresponding to the M PUCCH cells are uniformly configured as a first time domain feedback offset set; and
a first object corresponding to the first time domain feedback offset set is configured uniformly or separately for the M PUCCH cells, wherein
the first object is a numerology or a subcarrier spacing (SCS).

4. The method according to claim 3, wherein in a case that the first object corresponding to the first time domain feedback offset set is configured uniformly for the M PUCCH cells, the first object corresponding to the first time domain feedback offset set is determined based on a reference object, and the reference object is a reference numerology or a reference SCS.

5. The method according to claim 4, wherein the reference object meets one of the following:
the reference object is a first object corresponding to a first cell, and the first cell is a primary cell, a primary secondary cell, or a PUCCH secondary cell corresponding to the first PUCCH cell group;
the reference object is configured by higher layer signaling;
the reference object is a first object with a maximum index corresponding to the M PUCCH cells;
the reference object is a first object with a minimum index corresponding to the M PUCCH cells; or
in a case that a PUCCH cell is switched semi-statically based on a time domain pattern, the reference object is a first object corresponding to the time domain pattern.

6. The method according to claim 5, wherein in a case that the reference object is configured by the higher layer signaling, an index of the reference object is less than or equal to an index of a first object corresponding to any BWP configured in any one of the M PUCCH cells.

7. The method according to claim 4, wherein the sending, by the terminal, a first HARQ-ACK based on the first operation comprises:
determining a first time unit based on a target time domain feedback offset and the reference object, wherein the target time domain feedback offset is one time domain feedback offset in the first time domain feedback offset set;
determining a target time unit of the target PUCCH cell based on a correspondence between the first time unit and time unit(s) of the target PUCCH cell; and
sending the first HARQ-ACK in the target time unit.

8. The method according to claim 7, wherein the correspondence is determined based on a comparison relationship between a first index of a first object corresponding to the target PUCCH cell and a second index of the reference object.

9. The method according to claim 8, wherein the correspondence meets one of the following:
in a case that the first index is less than or equal to the second index, the first time unit corresponds to the target time unit; or
in a case that the first index is greater than the second index, the first time unit corresponds to Q time units of the target PUCCH cell, the target time unit is one of the Q time units, and Q is an integer greater than 1.

10. The method according to claim 9, wherein in a case that the first time unit corresponds to the Q time units of the target PUCCH cell, the determining a target time unit of the target PUCCH cell based on a correspondence between the first time unit and time unit(s) of the target PUCCH cell comprises one of the following:
determining the target time unit of the target PUCCH cell based on time unit(s) that meets a first condition among the Q time units, wherein the first condition comprises at least one of the following: being able to accommodate a first PUCCH resource, wherein the first PUCCH resource comprises a PUCCH resource corresponding to the first HARQ-ACK; or meeting a downlink processing time requirement of the terminal; or
determining a time unit with an index of a maximum value, a minimum value, or a preset value among the Q time units as the target time unit of the target PUCCH cell.

11. The method according to claim 10, wherein the determining the target time unit based on time unit(s) that meets a first condition among the Q time units comprises at least one of the following:
in a case that the number of time units that meet the first condition among the Q time units is 1, determining the time unit that meets the first condition as the target time unit; or
in a case that the number of time units that meet the first condition among the Q time units is greater than 1, determining a time unit with an index of a maximum value, a minimum value, or a preset value among the time units that meet the first condition as the target time unit.

12. The method according to claim 3, wherein in a case that the first object corresponding to the first time domain feedback offset set is configured separately for the M PUCCH cells, for a first PUCCH cell, the first object corresponding to the first time domain feedback offset set is determined based on the first object corresponding to the first PUCCH cell, and the first PUCCH cell is any one of the M PUCCH cells.

13. The method according to claim 2, wherein the time domain feedback offset sets corresponding to the M PUCCH cells are uniformly configured as a first time domain feedback offset set; and
a second object corresponding to the first time domain feedback offset set is configured uniformly or separately for the M PUCCH cells, wherein
the second object comprises at least one of the following: a time domain granularity; or the number of symbols corresponding to a sub-slot.

14. The method according to claim 13, wherein in a case that the second object corresponding to the first time domain feedback offset set is configured separately for the M PUCCH cells, and the second PUCCH cell is configured with physical layer priority(ies), for each uplink bandwidth part (BWP) corresponding to the second PUCCH cell, the second object corresponding to the first time domain feedback offset set is configured separately for each physical layer priority, and the second PUCCH cell is any one of the M PUCCH cells.

15. The method according to claim 2, wherein in a case that the time domain feedback offset sets corresponding to the M PUCCH cells are configured separately, both a first object and a second object that are corresponding to the second time domain feedback offset set are configured separately for the M PUCCH cells, wherein
the second time domain feedback offset set is a time domain feedback offset set corresponding to any one of the M PUCCH cells; the first object is a numerology or a subcarrier spacing (SCS); and the second object comprises at least one of the following: a time domain granularity; or the number of symbols corresponding to a sub-slot.

16. The method according to claim 1, wherein in a case that the time domain feedback offset sets corresponding to the M PUCCH cells are configured separately, the number of bits of a first field in first DCI meets one of the following:
being determined based on a maximum number in first number(s), wherein the first number(s) comprises the number of time domain feedback offsets in a time domain feedback offset set corresponding to each of the M PUCCH cells; or
being specified by a protocol or configured by higher layer signaling, wherein
the first DCI is a downlink scheduling DCI of any serving cell in the first PUCCH cell group, and the first field is used to indicate an index of a time domain feedback offset.

17. The method according to claim 16, wherein in a case that the number of bits of the first field is configured by the higher layer signaling, the number of bits of the first field in a downlink scheduling DCI of each serving cell in the first PUCCH cell group is configured uniformly or separately.

18. The method according to claim 1, wherein the determining valid PUCCH cell(s) corresponding to the first HARQ-ACK among the M PUCCH cells comprises:
in a case that a second PUCCH cell in the PUCCH cells meets a second condition, determining a third PUCCH cell as the valid PUCCH cell corresponding to the first HARQ-ACK, wherein
the first condition comprises at least one of the following:
based on a time domain pattern, the third PUCCH cell is in an available state at the feedback time domain position of the first HARQ-ACK; or
based on a time division duplex (TDD) pattern rule, the third PUCCH cell is in an available state at the feedback time domain position of the first HARQ-ACK.

19. The method according to claim 1, wherein the determining target PUCCH cell(s) corresponding to the first HARQ-ACK among the M PUCCH cells comprises at least one of the following:
in a case that the M PUCCH cells comprise only one valid PUCCH cell corresponding to the first HARQ-ACK, determining the valid PUCCH cell as the target PUCCH cell;
in a case that the M PUCCH cells comprise at least two valid PUCCH cells corresponding to the first HARQ-ACK, selecting, based on a first rule, one valid PUCCH cell from the at least two valid PUCCH cells as the target PUCCH cell;
selecting the target PUCCH cell from the M PUCCH cells based on a second DCI, wherein the second DCI indicates the target PUCCH cell; or
determining all or a part of valid PUCCH cells corresponding to the first HARQ-ACK among the M PUCCH cells as target PUCCH cells.

20. The method according to claim 19, wherein the first rule comprises at least one of the following:
determining a PUCCH cell with a minimum or maximum PUCCH cell index among the at least two valid PUCCH cells as the target PUCCH cell; or
determining a PUCCH cell with a minimum HARQ-ACK feedback delay among the at least two valid PUCCH cells as the target PUCCH cell.

21. A feedback method, comprising:
in a case that a first physical uplink control channel (PUCCH) cell group corresponding to a terminal comprises M PUCCH cells available for transmitting a hybrid automatic repeat request acknowledgement (HARQ-ACK), and M is an integer greater than 1, performing, by a network side device, a first operation; and
receiving, by the network side device, a first HARQ-ACK based on the first operation, wherein
the first operation comprises at least one of the following:
determining a time domain feedback offset set corresponding to each of the M PUCCH cells;
determining valid PUCCH cell(s) corresponding to the first HARQ-ACK among the M PUCCH cells; or
determining target PUCCH cell(s) corresponding to the first HARQ-ACK among the M PUCCH cells.

22. The method according to claim 21, wherein time domain feedback offset sets corresponding to the M PUCCH cells are configured uniformly or separately.

23. The method according to claim 22, wherein the time domain feedback offset sets corresponding to the M PUCCH cells are uniformly configured as a first time domain feedback offset set; and
a first object corresponding to the first time domain feedback offset set is configured uniformly or separately for the M PUCCH cells, wherein
the first object is a numerology or a subcarrier spacing (SCS).

24. The method according to claim 23, wherein in a case that the first object corresponding to the first time domain feedback offset set is configured uniformly for the M PUCCH cells, the first object corresponding to the first time domain feedback offset set is determined based on a reference object, and the reference object is a reference numerology or a reference SCS.

25. The method according to claim 24, wherein the reference object meets one of the following:
the reference object is a first object corresponding to a first cell, and the first cell is a primary cell, a primary secondary cell, or a PUCCH secondary cell corresponding to the first PUCCH cell group;
the reference object is configured by higher layer signaling;
the reference object is a first object with a maximum index corresponding to the M PUCCH cells;
the reference object is a first object with a minimum index corresponding to the M PUCCH cells; or
in a case that a PUCCH cell is switched semi-statically based on a time domain pattern, the reference object is a first object corresponding to the time domain pattern.

26. The method according to claim 25, wherein in a case that the reference object is configured by the higher layer signaling, an index of the reference object is less than or equal to an index of a first object corresponding to any BWP configured in any one of the M PUCCH cells.

27. The method according to claim 24, wherein the receiving, by the network side device, a first HARQ-ACK based on the first operation comprises:
determining a first time unit based on a target time domain feedback offset and the reference object, wherein the target time domain feedback offset is one time domain feedback offset in the first time domain feedback offset set;
determining a target time unit of the target PUCCH cell based on a correspondence between the first time unit and time unit(s) of the target PUCCH cell; and
receiving the first HARQ-ACK in the target time unit.

28. The method according to claim 27, wherein the correspondence is determined based on a comparison relationship between a first index of a first object corresponding to the target PUCCH cell and a second index of the reference object.

29. The method according to claim 28, wherein the correspondence meets one of the following:
in a case that the first index is less than or equal to the second index, the first time unit corresponds to the target time unit; or
in a case that the first index is greater than the second index, the first time unit corresponds to Q time units of the target PUCCH cell, the target time unit is one of the Q time units, and Q is an integer greater than 1.

30. The method according to claim 29, wherein in a case that the first time unit corresponds to the Q time units of the target PUCCH cell, the determining a target time unit of the target PUCCH cell based on a correspondence between the first time unit and time unit(s) of the target PUCCH cell comprises one of the following:
determining the target time unit of the target PUCCH cell based on time unit(s) that meets a first condition among the Q time units, wherein the first condition comprises at least one of the following: being able to accommodate a first PUCCH resource, wherein the first PUCCH resource comprises a PUCCH resource corresponding to the first HARQ-ACK; or meeting a downlink processing time requirement of the terminal; or
determining a time unit with an index of a maximum value, a minimum value, or a preset value among the Q time units as the target time unit of the target PUCCH cell.

31. The method according to claim 20, wherein the determining the target time unit based on time unit(s) that meets a first condition among the Q time units comprises at least one of the following:
in a case that the number of time units that meet the first condition among the Q time units is 1, determining the time unit that meets the first condition as the target time unit; or
in a case that the number of time units that meet the first condition among the Q time units is greater than 1, determining a time unit with an index of a maximum value, a minimum value, or a preset value among the time units that meet the first condition as the target time unit.

32. The method according to claim 23, wherein in a case that the first object corresponding to the first time domain feedback offset set is configured separately for the M PUCCH cells, for a first PUCCH cell, the first object corresponding to the first time domain feedback offset set is determined based on the first object corresponding to the first PUCCH cell, and the first PUCCH cell is any one of the M PUCCH cells.

33. The method according to claim 22, wherein the time domain feedback offset sets corresponding to the M PUCCH cells are uniformly configured as a first time domain feedback offset set; and
a second object corresponding to the first time domain feedback offset set is configured uniformly or separately for the M PUCCH cells, wherein
the second object comprises at least one of the following: a time domain granularity; or the number of symbols corresponding to a sub-slot.

34. The method according to claim 33, wherein in a case that the second object corresponding to the first time domain feedback offset set is configured separately for the M PUCCH cells, and the second PUCCH cell is configured with physical layer priority(ies), for each uplink bandwidth part (BWP) corresponding to the second PUCCH cell, the second object corresponding to the first time domain feedback offset set is configured separately for each physical layer priority, and the second PUCCH cell is any one of the M PUCCH cells.

35. The method according to claim 22, wherein in a case that the time domain feedback offset sets corresponding to the M PUCCH cells are configured separately, both a first object and a second object that are corresponding to the second time domain feedback offset set are configured separately for the M PUCCH cells, wherein
the second time domain feedback offset set is a time domain feedback offset set corresponding to any one of the M PUCCH cells; the first object is a numerology or a subcarrier spacing (SCS); and the second object comprises at least one of the following: a time domain granularity; or the number of symbols corresponding to a sub-slot.

36. The method according to claim 21, wherein in a case that the time domain feedback offset sets corresponding to the M PUCCH cells are configured separately, the number of bits of a first field in first DCI meets one of the following:
being determined based on a maximum number in first number(s), wherein the first number(s) comprises the number of time domain feedback offsets in a time domain feedback offset set corresponding to each of the M PUCCH cells; or
being specified by a protocol or configured by higher layer signaling, wherein
the first DCI is downlink scheduling DCI of any serving cell in the first PUCCH cell group, and the first field is used to indicate an index of a time domain feedback offset.

37. The method according to claim 36, wherein in a case that the number of bits of the first field is configured by the higher layer signaling, the number of bits of the first field in the downlink scheduling DCI of each serving cell in the first PUCCH cell group is configured uniformly or separately.

38. The method according to claim 21, wherein the determining valid PUCCH cell(s) corresponding to the first HARQ-ACK among the M PUCCH cells comprises:
in a case that a second PUCCH cell in the PUCCH cells meets a second condition, determining a third PUCCH cell as the valid PUCCH cell corresponding to the first HARQ-ACK, wherein
the first condition comprises at least one of the following:
based on a time domain pattern, the third PUCCH cell is in an available state at the feedback time domain position of the first HARQ-ACK; or
based on a time division duplex (TDD) pattern rule, the third PUCCH cell is in an available state at the feedback time domain position of the first HARQ-ACK.

39. The method according to claim 21, wherein the determining target PUCCH cell(s) corresponding to the first HARQ-ACK among the M PUCCH cells comprises at least one of the following:
in a case that the M PUCCH cells comprise only one valid PUCCH cell corresponding to the first HARQ-ACK, determining the valid PUCCH cell as the target PUCCH cell;
in a case that the M PUCCH cells comprise at least two valid PUCCH cells corresponding to the first HARQ-ACK, selecting, based on a first rule, one valid PUCCH cell from the at least two valid PUCCH cells as the target PUCCH cell;
selecting the target PUCCH cell from the M PUCCH cells based on second DCI, wherein the second DCI indicates the target PUCCH cell; or
determining all or a part of valid PUCCH cells corresponding to the first HARQ-ACK among the M PUCCH cells as target PUCCH cells.

40. The method according to claim 39, wherein the first rule comprises at least one of the following:
determining a PUCCH cell with a minimum or maximum PUCCH cell index among the at least two valid PUCCH cells as the target PUCCH cell; or
determining a PUCCH cell with a minimum HARQ-ACK feedback delay among the at least two valid PUCCH cells as the target PUCCH cell.

41. A feedback apparatus, comprising:
a first execution module, configured to: in a case that a first physical uplink control channel (PUCCH) cell group corresponding to a terminal comprises M PUCCH cells available for transmitting a hybrid automatic repeat request acknowledgement (HARQ-ACK), and M is an integer greater than 1, perform a first operation; and
a sending module, configured to send a first HARQ-ACK based on the first operation, wherein
the first operation comprises at least one of the following:
determining a time domain feedback offset set corresponding to each of the M PUCCH cells;
determining valid PUCCH cell(s) corresponding to the first HARQ-ACK among the M PUCCH cells; or
determining target PUCCH cell(s) corresponding to the first HARQ-ACK among the M PUCCH cells.

42. A feedback apparatus, comprising:
a second execution module, configured to: in a case that a first physical uplink control channel (PUCCH) cell group corresponding to a terminal comprises M PUCCH cells available for transmitting a hybrid automatic repeat request acknowledgement (HARQ-ACK), and M is an integer greater than 1, perform a first operation; and
a receiving module, configured to receive a first HARQ-ACK, wherein
the first operation comprises at least one of the following:
determining a time domain feedback offset set corresponding to each of the M PUCCH cells;
determining valid PUCCH cell(s) corresponding to the first HARQ-ACK among the M PUCCH cells; or
determining target PUCCH cell(s) corresponding to the first HARQ-ACK among the M PUCCH cells.

43. A terminal, comprising a processor, a memory, and a program or an instruction stored in the memory and executable on the processor, wherein when the program or the instruction is executed by the processor, steps of the feedback method according to any one of claims 1 to 20 are implemented.

44. A network side device, comprising a processor, a memory, and a program or an instruction stored in the memory and executable on the processor, wherein when the program or the instruction is executed by the processor, steps of the feedback method according to any one of claims 21 to 40 are implemented.

45. A readable storage medium, wherein the readable storage medium stores a program or an instruction, and when the program or the instruction is executed by a processor, steps of the feedback method according to any one of claims 1 to 20 are implemented, or steps of the feedback method according to any one of claims 21 to 40 are implemented.
